# EUROPEAN PATENT APPLICATION

(11) **EP 1 686 548 A2**
(43) Date of publication of application: **02.08.2006**
(21) Application number: 06001766.2
(22) Date of filing: 27.01.2006
(51) Int. Cl.: G07F 17/32

(54) **Gaming machine and gaming system**

(30) Priority: 28.01.2005 JP 2005021036; 17.01.2006 JP 2006009141
(71) Applicant: Aruze Corporation, Tokyo 135-0063 (JP)
(72) Inventor: Kogo, Junichi, Tokyo 135-0063 (JP)
(74) Representative: HOFFMANN EITLE

(57) **Abstract**

The gaming system 200 is constructed from plural slot machines 1 and the roulette game machine 100. Based on that the specific operation is conducted on the betting board 90 which is displayed with the minimum size at the lower position on the lower liquid crystal display 4, the betting board 90 is displayed with the maximum size, thereby the bet operation for the roulette game machine 100 can be done. At that time, on the lower liquid crystal display 4, the variable display portions 21 ∼ 23 used in the slot game are also displayed, therefore any of the slot game and the roulette game can be executed.

## Description

### BACKGROUND OF THE INVENTION

### 1. Field of the Invention

The present invention relates to a gaming machine communicably connected to a multi-players joining gaming machine in which a game that a plurality of players can participate is executed, the gaming machine being able to execute not only a game different from a multi-players joining game conducted in the multi-players joining gaming machine but also being able to participate in the multi-players joining game, and to a gaming system including the gaming machine.

### 2. Description of Related Art

In a game arcade, various gaming machines including slot machines are installed. For example, in the gaming machine installed in the game arcade, there exist not only a gaming machine for one player such as a slot machine in which one player conducts a game but also a gaming machine for multi-players such as a roulette game machine in which a plurality of players can participate in a roulette game.

In the game arcade in which various gaming machines mentioned above are installed, players are fascinated on the basis of characteristics of various gaming machines. Thereby, even if a player conducts one game, there may be a case that the player wants to conduct different games.

For example, in the multi-players joining game such as a horse race game or roulette game, if players early finish operations to participate in the game during a participation acceptance time for accepting participation in the game, the other players can conduct no operations till the participation acceptance time elapses.

That is to say, in this case, players cannot solely help spending a tedious time for waiting a lapse of the participation acceptance time.

In order to dissolve the above problem, it has been proposed an invention described in Japanese Unexamined Publication No. 2003-135855. According to the invention, in the gaming machine in which the multi-players joining game is conducted, it is disclosed a gaming system in which the game for one player, different from the multi-players joining game, that the player can enjoy alone can be executed during the tedious time such as the participation acceptance time mentioned above.

On the other hand, even if the player plays the gaming machine in which the game for one player is conducted, a desire that the player wants to play the other gaming machines will occur. For example, if the player plays the game in the slot machine and has monotonous feeling in the game conducted in the slot machine, there may be occur a case that the player feels to want to play the multi-players joining game such as the roulette game.

In this case, the player cannot participate in the multi-players joining game if the player does not move to the other place where the gaming machine for the multi-players joining game such as the roulette game is installed. Further, based on that a number of players who can participate in the game done in the other gaming machine is limited, there may be a case that the player cannot participate in the game in spite that the player moves to the other place to participate in the game conducted in the other gaming machine.

Thus, in order to dissolve the above problems, it is proposed a gaming system in which the slot machine being a gaming machine that the game for one player is conducted is constructed as a terminal to play the multi-players joining game.

In this case, in the slot machine, there are provided a display portion to display game contents inherent in the slot machine and a display device to display game contents concerning with the multi-players joining game. This display device is arranged at an upper position of the display portion and is constructed from a touch panel. That is, by pressing the display device, operation concerning with the multi-players joining game can be done. Thus, the player can participate in the multi-players joining game conducted in the gaming machine installed in the place distant from the place where the slot machine is installed, without separating the place of the slot machine. Therefore, the player can participate in both the game in the slot machine and the multi-players joining game through one gaming machine.

And as the slot machine similar to the above machine, there exists a gaming machine in which a display screen of the display device can be completely switched so that game contents concerning with the game for one player and game contents concerning with the multi-players joining game are alternately displayed, thereby the player can participate in both two games without separating from the place of the slot machine.

In the gaming system disclosed in Japanese Unexamined Publication No. 2003-135855, the player can play both the multi-players joining game and the game for one player while staying at the gaming machine of the multi-players joining game. And although advantage/disadvantage in the multi-players joining game is changed (for example, payout is changed) according to a game result in the game for one player, a time that the player can conduct the game for one player is limited to the participation acceptance time. That is, the game for one player is set to an additional game of the multi-players joining game and is a game to spend a tedious time during the participation acceptance time.

Therefore, for the player wanting to also enjoy the game for one player, since the game for one player terminates according to termination of the participation acceptance time, the player cannot sufficiently enjoy the game for one player. Namely, in the gaming machine of the multi-players joining game, although the player can enjoy both the multi-players joining game and the game for one player, the player cannot sufficiently enjoy the game for one player.

On the other hand, in the gaming system in which the player can participate in the multi-players joining game while conducting the game in the slot machine mentioned above, when operation of the multi-players joining game is done, the player cannot participate in the multi-players joining game unless the player presses the display device arranged at the upper position.

Therefore, for example, in a case that the player conducts operation of the slot machine while sitting on a seat, the player cannot participate in the multi-players joining game if the player does not conduct operation of the multi-players joining game while standing.

As mentioned, in the above gaming system, there exists a problem that any one of the game for one player and the multi-players joining game becomes hard to operate.

And in the slot machine in which the display screen of the display device is completely switched so as to alternately display game contents of the game for one player and game contents of the multi-players joining game, in comparison with the slot machine mentioned above, there is no problem that operation of the game becomes hard to operate since it is enough only to switch the display screen between the game for one player and the multi-players joining game. However, if one of the games is conducted, game contents of the other game are not displayed on the display screen of the display device.

Therefore, for example, if the slot machine is operated, the player cannot acknowledge the state of the multi-players joining game. On the other hand, if the multi-players joining game is conducted, the player cannot acknowledge the state of the slot machine. Thus, the player cannot sufficiently enjoy both the game for one player and the multi-players joining game.

### SUMMARY OF THE INVENTION

In order to dissolve the above problems, the present invention has been done and has an object to provide a gaming machine communicably connected to a multi-players joining gaming machine in which a game that a plurality of players can participate is executed, the gaming machine being able to execute not only a game different from a multi-players joining game conducted in the multi-players joining gaming machine but also being able to participate in the multi-players joining game, and a gaming system including the gaming machine.

In order to accomplish the object, according to one aspect of the present invention, it is provided a gaming machine comprising:
an operation portion for conducting an operation of a first game;
a communication device for communicating with another gaming machine providing a second game in which a plurality of players participate;
a first game control device for controlling the first game;
a first display device for displaying first image data concerning with the first game;
the gaming machine further comprising:
   a display control device for controlling the first display device so as to switch a first display mode according to which the first image data are displayed and a second display mode according to which both the first image data and an acceptance portion to conduct an operation of the second game are displayed; and
   a game operation control portion for accepting the operation of the second game through the acceptance portion when the first display device is switched to the second display mode by the display control device.

Further, according to another aspect of the present invention, it is provided a gaming system including a first gaming machine for providing a first game and a second gaming machine for providing a second game, the first gaming machine and the second gaming machine being connected so as to communicate with each other,
wherein the first gaming machine comprising:
a first operation portion for conducting an operation of the first game;
a first game control device for controlling the first game;
a first display device for displaying first image data concerning with the first game;
a display control device for controlling the first display device so as to switch a first display mode according to which the first image data are displayed and a second display mode according to which both the first image data and an acceptance portion to conduct an operation of the second game are displayed; and
a game operation control portion for accepting the operation of the second game through the acceptance portion when the first display device is switched to the second display mode by the display control device;
a first communication device for transmitting an operation result through the acceptance portion to the second gaming machine and for receiving data concerning with the second game transmitted from the second gaming machine;
the second gaming machine comprising:
   a second game control device for controlling the second game;
   a second operation portion for conducting the operation of the second game; and
   a second communication device for transmitting the data concerning with the second game to the first gaming machine and for receiving the operation result through the acceptance portion transmitted from the first gaming machine.

In the gaming machine and the gaming system according to the present invention, when the first display device is switched to the second display mode in the first gaming machine, information concerning with the first game can be obtained from the first image data displayed on the first display device and the operation of the second game in which a plurality of players participate can be conducted through the acceptance portion displayed on the first display device. Therefore, when the player loses interest for the first game, the player can participate in the second game. At that time, even if the operation of the second game is done, the image data concerning with the first game is displayed on the first display device, thereby the player can grasp the state of both the first game and the second game. Thus, the player can sufficiently enjoy both the first game and the second game.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.

In the drawings,
Fig. is an explanatory view showing a gaming system according to the embodiment,
Fig. 2A is an outline perspective view of a slot machine constructing the gaming system according to the embodiment, and Fig. 2B is a plan view of a control panel arranged in the slot machine of the embodiment,
Fig. 3 is an explanatory view of symbol columns used in the slot machine of the embodiment,
Fig. 4 is a block diagram showing a control system of the slot machine of the embodiment,
Fig. 5 is a block diagram showing a liquid crystal drive circuit in the slot machine of the embodiment,
Fig. 6 is a flowchart of a main control program in the slot machine of the embodiment,
Fig. 7 is an outline perspective view showing a roulette game machine constructing the gaming system of the embodiment,
Fig. 8 is an explanatory view showing a roulette wheel provided in the roulette game machine of the embodiment,
Fig. 9 is an explanatory view showing a BET screen displayed in a satellite of the roulette game machine of the embodiment,
Fig. 10 is a block diagram showing a control system of the roulette game machine of the embodiment,
Fig. 11 is a block diagram showing a control system of the satellite constructing the roulette game machine of the embodiment,
Fig. 12 is a schematic view schematically showing a memory area of a RAM provided in the satellite of the embodiment,
Fig. 13 is a flowchart of a main control program in the roulette game machine of the embodiment,
Fig. 14 is a flowchart of a main control program in the satellite of the embodiment,
Fig. 15 is a flowchart of a bet process program in the satellite of the embodiment,
Fig. 16 is a flowchart of a communication process program conducted between the slot machine and the roulette game machine in the embodiment,
Fig. 17 is an explanatory view showing a display example of an upper liquid crystal display in the slot machine of the embodiment,
Fig. 18 is a flowchart of a condition observation process program conducted in the slot machine of the embodiment,
Fig. 19 is an explanatory view showing a display example 1 of a lower liquid crystal display in the slot machine of the embodiment,
Fig. 20 is an explanatory view showing a display example 2 of a lower liquid crystal display in the slot machine of the embodiment,
Fig. 21 is a flowchart of a roulette participation process program conducted between the slot machine and the roulette game machine in the embodiment, and
Fig. 22 is a flowchart of a bet process program conducted in the slot machine of the embodiment.

### DETAILED DESCRIPTION OF THE PREFERRED EMBODIMENTS

Hereinafter, the embodiment embodying a gaming system according to the present invention will be described in detail with reference to the drawings.

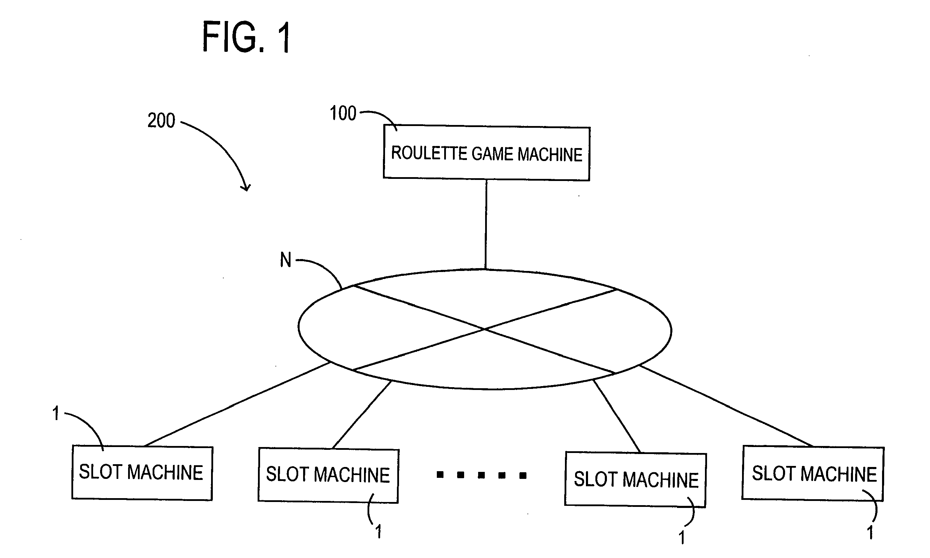

At first, a construction of the gaming system according to the embodiment will be described with reference to the drawings. Fig. 1 is an explanatory view showing a construction example of the gaming system according to the embodiment.

A gaming system 200 of the present invention is constructed from plural slot machines 1 and a roulette game machine 100. The slot machines 1 and the roulette game machine 100 are connected through a network N, thereby such construction functions as the gaming system 200 of the embodiment.

Here, in each of the slot machines 1, a slot communication device 25 mentioned later is provided and various data can be mutually transmitted and received through the wireless manner among the slot machines 1.

In the gaming system 200 of the embodiment, although connection and transmission and reception of the data among the slot machines 1 and between the roulette game machine 100 and each of the slot machines 1 through the network N are conducted through the wireless manner, it is not limited to the wireless manner. Such connection to the network N may be done through the wire.

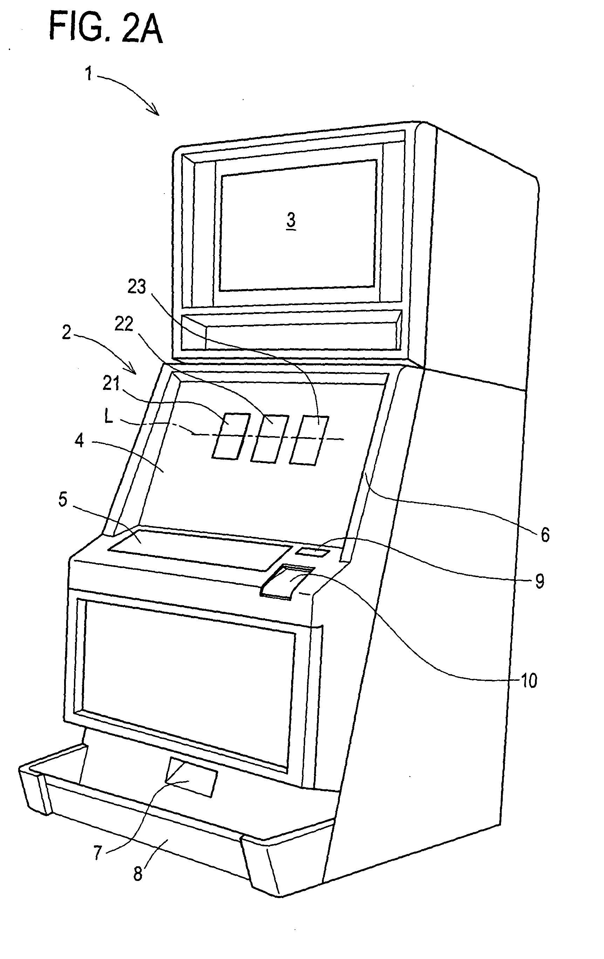

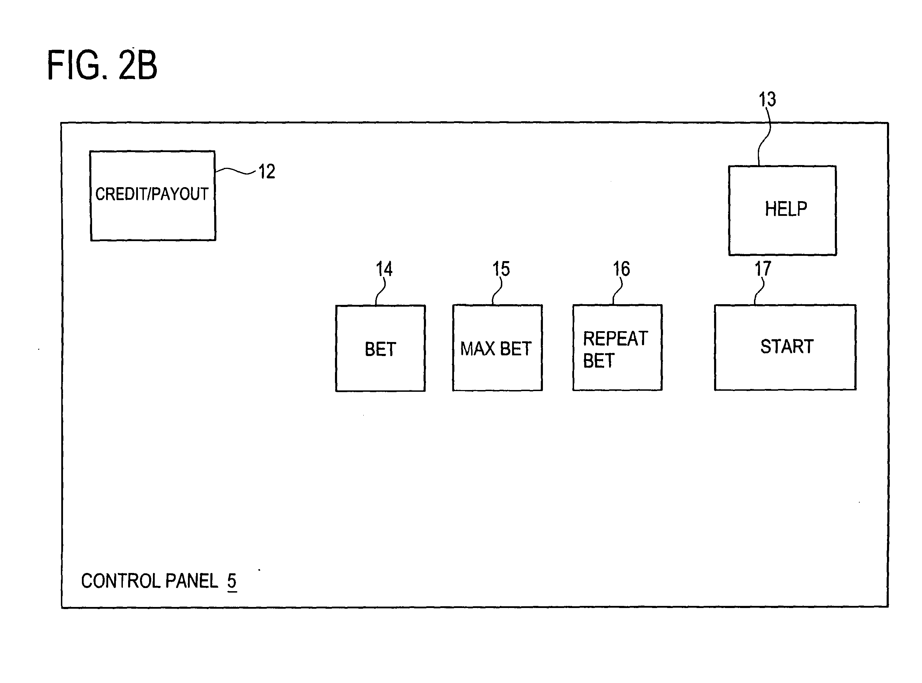

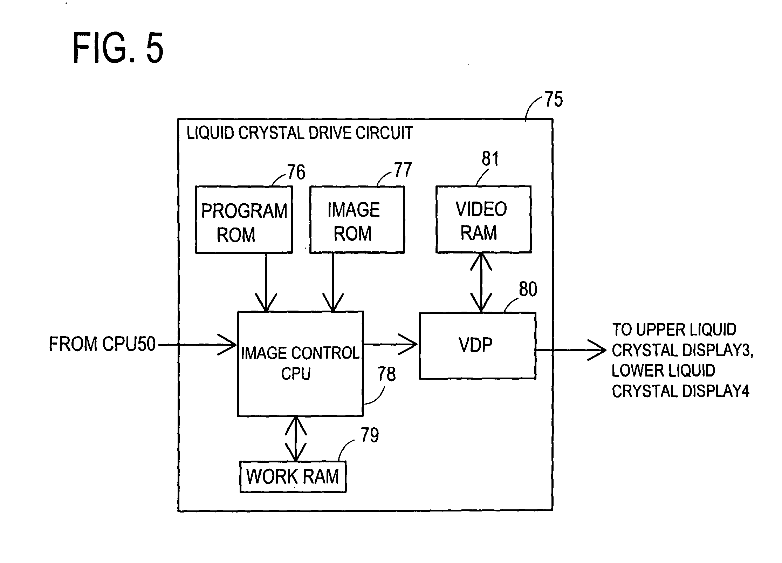

Here, the slot machine 1 constructing the gaming system 200 of the embodiment will be described with reference to Figs. 2 to 5.

First, an outline construction of the slot machine 1 will be described with reference to Fig. 2A. Fig. 2A is an outline perspective view of the slot machine 1.

In Fig. 2A, the slot machine 1 has a cabinet 2 which forms whole construction of the slot machine 1. At an upper position of a front plane of the cabinet 2, an upper liquid crystal display 3 is arranged and a lower liquid crystal display 4 is arranged on a device front panel 6 which is arranged at a center position of the front plane of the cabinet 2. Here, the upper liquid crystal display 3 is constructed from a liquid crystal display generally used, and on the upper liquid crystal display 3, game contents of a roulette game machine 100 mentioned later are displayed.

On the other hand, the lower liquid crystal display 4 is a liquid crystal display with a so-called transparent touch panel 20 arranged on the front plane thereof, and icons and the like displayed on the lower liquid crystal display 4 can be selected by pressing them through the transparent touch panel 20 with a finger. Based on that a predetermined operation is conducted by the transparent touch panel 20, a BET screen of credits for the roulette game machine 100 can be displayed. At that time, a BET operation for the roulette game conducted in the roulette game machine 100 can be done by conducting an input operation through the transparent touch panel 20. This point will be described in detail hereinafter.

Further, on a surface of the lower liquid crystal display 4, credits are displayed and three variable display portions 21, 22 and 23 are basically displayed as shown in Fig. 1. On each of the variable display portions 21, 22 and 23, various symbols are variably displayed while being scrolled (hereinafter, called as "scroll display") from an upper direction toward a lower direction, thereafter stopped and displayed. As mentioned, a slot game as a basic game in the slot machine 1 is executed.

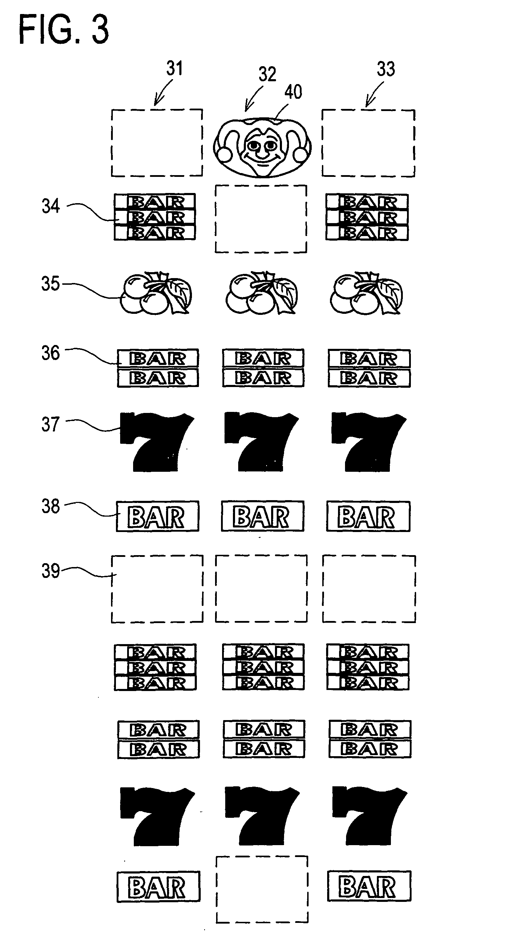

Therefore, in the slot machine 1 of the embodiment, the slot game (there exist a base game and a bonus game) is conducted through video reels which are realized by displaying variable display portions 21 to 23, in which symbol columns 31 ~ 33 (see Fig. 3) mentioned later are scrolled from the upper direction toward the lower direction, on the lower liquid crystal display 4. The symbol columns 31 ~ 33 displayed while being scrolled are stopped and displayed with a predetermined symbol combination after a predetermined time has elapsed.

In the slot game (there exist a base game and a bonus game), in a case that the symbols stopped and displayed on an activated pay line L in each of the variable display portions 21 ~ 23 become a predetermined symbol combination, credits are given to the player and the player progresses the game by using the symbol columns displayed and various operation buttons.

As shown in Fig. 2A, at a lower side of the lower liquid crystal display 4, a control panel 5 projected forward is provided. On an upper step of the control panel 5, as shown in Fig. 2B, a C/P (credit/payout) button 12, a help button 13 are arranged, and at the right side of the help button 13, a coin insertion slot 9 is arranged. And on a lower step of the control panel 5, a BET button 14, a MAX BET button 15, a REPEAT BET button 16 and a start button 17 are arranged from the left side in order. At the right side of the start button 17, a bill insertion portion 10 is arranged.

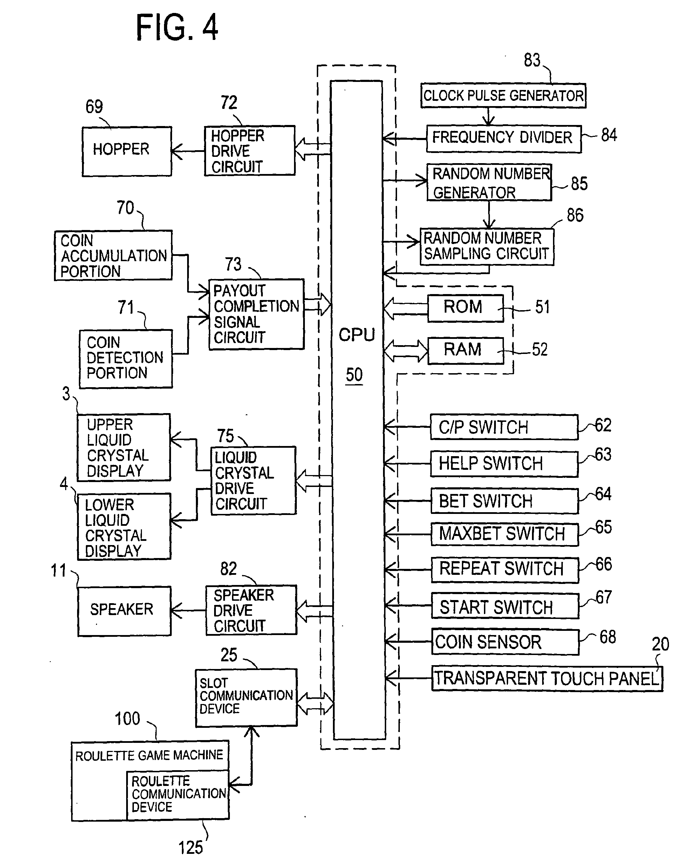

The C/P button 12 is a button which is generally pressed when the game is terminated and coins corresponding to credits retained by the player at present are paid out. Therefore, when the C/P button 12 is pressed, coins are paid out to the player from a hopper 69 (see Fig. 4) through a coin payout opening 7. Here, if the C/P button 12 is not pressed, coins given as an award on the basis of a game result are automatically carried over as credits and accumulated in a coin accumulation portion 70 (see Fig. 4).

And to the C/P button 12, a C/P switch 62 (see Fig. 4) is attached, and when the C/P button 12 is pressed, a switch signal is output to a CPU 50 (see Fig. 4) from the C/P switch 62.

And the help button 13 is a button which is pressed when an operation method of the slot machine 1 cannot be understood. Therefore, when the help button 13 is pressed, various kinds of help information are displayed on the lower liquid crystal display 4.

Here, to the help button 13, a help switch 63 (see Fig. 4) is attached, and when the help button 13 is pressed, a switch signal is output to the CPU 50 (see Fig. 4) from the help switch 63.

Further, the BET button 14 is a button which is operated when coins credited are betted. Here, every the BET button 14 is pressed one time a bet number is added by one against the activated pay line L. In the slot machine 1 of the embodiment, one of the bet numbers of "1" ~ "10" can be set against the activated pay line L and the game can be conducted with the bet number set.

Here, to the BET button 14, a BET switch 64 (see Fig. 4) is attached, and when the BET button 14 is pressed, a switch signal is output to the CPU (see Fig. 4) from the BET switch 64.

And the MAX BET button 15 is button which is operated when coins credited are betted with the maximum bet number ("10" in the embodiment) against the activated pay line L. Here, when the MAX BET button 15 is pressed, the bet number is set to "10" against the activated pay line L.

To the MAX BET button 15, a MAX BET switch 65 (See Fig. 4) is attached, and when the MAX BET button 15 is pressed, a switch signal is output to the CPU 50 (See Fig. 4) from the MAX BET switch 65.

The REPEAT BET button 16 is a button which is operated when the game is started in the slot machine 1 based on the bet number at present or previously set. Therefore, when the REPEAT BET button 16 is pressed, variable display of the symbols is started in each of the variable display portions 21 ~ 23 of the lower liquid crystal display 4.

Here, to the REPEAT BET BUTTON 16, a REPEAT BET switch 66 (see Fig. 4) is attached, and when the REPEAT BET button 16 is pressed, a switch signal is output to the CPU 50 (see Fig. 4) form the REPEAT BET switch 66.

The start button 17 is a button which is operated when the game is started in the slot machine 1 based on the bet number betted through the BET button 14 or the MAX BET button 15. Therefore, when the start button 17 is pressed, variable display of the symbols is started in each of the variable display portions 21 ~ 23 of the lower liquid crystal display 4.

Here, to the start button 17, a start switch 67 (see Fig. 4) is attached, and when the start button 17 is pressed, a switch signal is output to the CPU 50 (see Fig. 4) from the start switch 67.

AT a lower position of the cabinet 2, the coin payout opening 7 is formed and a coin tray 8 for receiving coins paid out from the coin payout opening 7 is provided. Within the coin payout opening 7, a coin detection portion 71, which is mentioned later (see Fig. 4), constructed from a coin sensor is arranged. The coin detection portion 71 counts a number of coins paid out from the coin payout opening 7.

Next, each of the symbol columns 31 ~ 33, which are stopped and displayed in the variable display portions 21 ~ 23 of the lower liquid crystal display 4, will be described with reference to Fig. 3. Fig. 3 is a schematic view showing the symbol columns displayed in the variable display portions 21 ~ 23.

The symbol columns, which are projected on the lower liquid crystal display 4 and stopped and displayed after the scroll display, are set to three columns. The symbol column 31 is a symbol column which is variably displayed in the variable display portion 21, the symbol column 32 is a symbol column which is variably displayed in the variable display portion 22 and the symbol column 33 is a symbol column which is variably displayed in the variable display portion 23. And by using the symbol columns 31 - 33, the base game and the bonus game are conducted.

Here, each of the symbol column 31 and 33 has the same symbol arrangement. Each of the symbol columns is constructed from eleven (11) symbols obtained by voluntarily combining a triple BAR 34, a cherry 35, a double BAR 36, a seven 37, a single BAR 38 and a blank 39 (area where no symbol exists).

And although the symbol column 32 is as same as each of the symbol columns 31 and 33 at the point that the symbol column 32 is constructed by combining the triple BAR 34, the cherry 35, the double BAR 36, the seven 37, the single BAR 38 and the blank 39, the symbol column 32 is different at the point that one trigger symbol 40 is further arranged. The trigger symbol 40 is a symbol to shift to the bonus game, and if the trigger symbol 40 is stopped and displayed on the activated pay line L in the variable display portion 22, the game state can be shifted to the bonus game mentioned later.

Here, the bonus game is a game which is conducted after the base game is terminated, and in many cases the bonus game is generally more beneficial for the player. If the game state shifts to the bonus game, it is executed a game (so-called free game) in which 15 ~ 25 games can be continuously and automatically executed without betting any credits corresponding to a result of the lottery conducted when the game state shifts to the bonus game.

And in a case that each of the symbol columns 31 ~ 33 scrolled in each of the variable display portions 21 ~ 23 is stopped and displayed, three symbols are respectively stopped and displayed in each of the variable display portions 21 ~ 23. At that time, the symbols stopped and displayed are determined beforehand based on a result of internal lottery mentioned later, and display of the lower liquid crystal display 4 is controlled based on such result.

And various winning symbol combinations are set beforehand based on plural kinds of symbol combinations, and when the symbol combination corresponding to the winning symbol combination is stopped on the activated pay line L (see Fig. 2A), credits corresponding to the winning symbol combination are added.

Next, a control system of the slot machine 1 will be described with reference to Fig. 4. Fig. 4 is a block diagram schematically showing a control system of the slot machine 1 according to the embodiment.

In Fig. 4, the control system of the slot machine 1 is basically constructed from a CPU 50, and a ROM 51 and a RAM 52 are connected to the CPU 50. In the ROM 51, a main process program mentioned later, a base game process program, a bonus game process program, a lottery table used when it is conducted a lottery to determine the symbols which are stopped and displayed in the base game, a lottery table used when it is conducted a lottery to determine the symbols which are stopped and displayed in the bonus game, and the other various programs necessary for control of the slot machine 1 and data tables. And the RAM 52 is a memory to temporarily store various data calculated by the CPU 50.

And to the CPU 50, a clock pulse generator 83 for generating standard clock pulses and a frequency divider 84 are connected, and a random number generator 85 for generating random numbers and a random number sampling circuit 86 are also connected. The random number sampled through the random number sampling circuit 86 is utilized in various lotteries of the winning symbol combinations and the like. Further, to the CPU 50, the C/P switch 62 attached to the C/P button 12, the help switch 62 attached o the help button 13, the BET switch 64 attached to the BET button 14, the MAX BET switch 65 attached to the MAX BET button 15 and the REPEAT BET switch 66 attached to the REPEAT BET button 16 are respectively connected to the CPU 50. The CPU 50 conducts control to execute various operations each of which corresponds to each button, based on the switch signal output from each switch by press thereof.

Further, to the CPU 50, the coin sensor 68 arranged in the coin insertion slot 9 is connected. The coin sensor 68 detects coins inserted from the coin insertion slot 9 and the CPU 50 calculates the number of inserted coins based on the coin detection signal output from the coin sensor 68.

Further, to the CPU 50, the transparent touch panel 20 arranged on the front plane of the lower liquid crystal display 4 is connected. The operation through the transparent touch panel 20 is conducted on the basis of press by the finger of the player. The operation information of the transparent touch panel 20 is transmitted to the CPU 50.

In the transparent touch panel 20 of the slot machine 1 according to the embodiment, although the operation concerning with the slot game conducted in the slot machine 1 can be executed, the display operation to display the BET screen and the BET operation on the BET screen for the roulette game machine 100 can be also executed, by conducting the predetermined operations.

Therefore, based on the operation information displayed on the lower liquid crystal display 4 through the transparent touch panel 20, it can be determined whether or not the BET operation to participate in the roulette game (BET screen display operation) is conducted and whether or not the BET operation of chips for the roulette game is conducted.

If the BET screen is displayed, based on that the BET operation is done on the BET screen displayed on the lower liquid crystal display 4 through the transparent touch panel 20, such BET information is transmitted to the CPU 50. And based on the BET information, such BET information of the player at present is stored in the RAM 52 every the BET operation is done. Here, such BET information is transmitted to the roulette game machine 100 mentioned later.

To the CPU 50, a hopper 69 is connected through a hopper drive circuit 72. When a drive signal is output to the hopper drive circuit 72 from the CPU 50, the hopper 69 pays out a predetermined number of coins from the coin payout opening 7.

And to the CPU 50, a coin accumulation portion 70 and a coin detection portion 72 are connected through a payout completion signal circuit 73. Here, the coin accumulation portion 70 constructed from a circuit to store coins inserted through the coin insertion slot 9 and coins given for the award as credits, and the coin accumulation portion 70 can store coins as credits till the number of coins reaches to the predetermined maximum permission number. On the other hand, the coin detection portion 71 is constructed from a circuit to count coins paid out from the hopper 69.

And when coins are given as the award, and the coin accumulation portion 70 detects that coins are stored as credits or the coin detection portion 71 detects that coins are paid out from the hopper 69, the payout completion signal circuit 73 outputs a payout completion signal to the CPU 50. Further, when coins stored as credits are paid out, and the coin accumulation portion 70 or the coin detection portion 71 detects that payout of coins stored as credits from the hopper 69 is completed, the payout completion signal circuit 73 outputs the payout completion signal to the CPU 50.

Further, to the CPU 50, the upper liquid crystal display 3 and the lower liquid crystal display 4 are connected through a liquid crystal drive circuit 75, and the upper liquid crystal display 3 and the lower liquid crystal display 4 are controlled by the CPU 50.

Here, as shown in Fig. 4, the liquid crystal drive circuit 75 is constructed from a program ROM 76, an image ROM 77, an image control CPU 78, a work RAM 79, a VDP (video display processor) 80 and a video RAM 81. And in the program ROM 76, there are stored an image control program for controlling display of the upper liquid crystal display 3 and the lower liquid crystal display 4 and various selection tables. And in the image ROM 77, for example, there are stored dot data for forming images of the symbol columns 31 ~ 33 (see Fig. 3) and the image used when it is displayed a state that a ball is rolling on a roulette wheel on the upper liquid crystal display 3.

And the image control CPU 78 determines the images displayed on the upper liquid crystal display 3 and the lower liquid crystal display 4 among the dot data stored beforehand in the image ROM 77, according to the image control program stored beforehand in the program ROM 76 based on parameters set by the CPU 50. Further, the work RAM 79 functions as a temporary memory when the image control program is executed by the image control CPU 78. And the VDP 80 forms images corresponding to display contents determined by the image control CPU 78 and outputs such images to the upper liquid crystal display 3 and the lower liquid crystal display 4. Thereby, for example, the symbol columns 31 ~ 33 displayed on the lower liquid crystal display 4 are scrolled. Here, the video RAM 81 functions as a temporary memory when images are formed by the VDP 80.

And to the CPU 50, a speaker 11 is connected through a speaker drive circuit 82 and the speaker 11 produces various effect sounds when various effects are conducted based on the output signal from the speaker drive circuit 82.

Further, to the CPU 50, a slot communication device 25 is connected. The slot communication device 25 converts signals transmitted through the slot machine 1 into signals so as to become a transmittable format, corresponding to a transmission format through a telephone line or a LAN cable, and transmits such signals to the outside. And the slot communication device 25 receives the signals transmitted from the outside and inverts the signals so as to become a readable format through the slot machine 1. Further, the slot communication device 25 is connected to the network N through the wireless manner and is also connected to a roulette communication device 125 of the roulette game machine 100 through the network N.

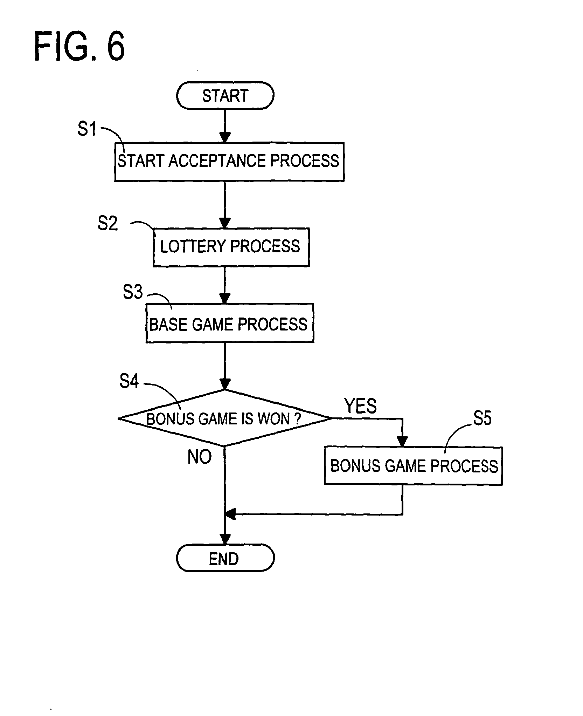

Next, the main process program conducted in the slot machine 1 will be described with reference to Fig. 6. Fig. 6 is a flowchart of the main process program of the slot machine 1 according to the embodiment. Here, the main process program is stored in the ROM 51 provided in the slot machine 1 and executed by the CPU 50.

At first, when procedure shifts to step (abbreviated as "S" hereinafter) 1, a start acceptance process is executed. The start acceptance process (S1) is a process to accept an execution start of the slot game. Therefore, in the start acceptance process, it is determined whether or not the credit exists.

The credit increases on the basis of insertion of coins through the coin insertion slot 9 and winning in the slot game and the roulette game, and decreases on the basis of betting in the slot gam and roulette game. That is to say, if the credit is zero (0), the start acceptance process (s1) is waited, namely, such process is waited till the credit increases by insertion of coins.

And if the credit exists (not zero), the CPU 50 accepts the switch signal output from the BET switch 64, the MAX BET switch 65, the REPEAT BET switch 66 or the start switch 67, based on operation of the BET button 14, the MAX BET button 15, the REPEAT BET button 16 or the start button 17. And at the time that the switch signal output from the REPEAT BET switch 66 or the start switch 67 is accepted, the game is started with the bet number set or the bet number as same as that in the previous time.

In S2, based on the switch signal output from the BET switch 64, the MAX BET switch 65, the REPEAT BET switch 66 or the start switch 67, various lottery processes are conducted. Concretely, the lottery of winning symbol combination in the base game which is done by using the variable display portions 21 ~ 23 is conducted by using the random number value sampled through the random number sampling circuit 86 and the predetermined lottery table, thereby the symbols stopped and displayed are determined. And based on the symbol combination stopped and displayed on the activated pay line L, the winning symbol combination and payout thereof are determined.

Next, in S3, the base game process is conducted. In the base game process, variable display of the symbol columns 31 ~ 33 is started in the variable display portions 21 ~ 23, and the symbols are stopped and displayed based on the lottery result of the lottery process done in S2 after a predetermined time elapses. Further, based on the symbol combination stopped and displayed on the activated pay line L, credits corresponding to the payout preset for the winning symbol combination are paid out.

Further, in S3, it is determined whether or not the trigger of the bonus game is won based on the lottery result in the lottery process (S2). Concretely speaking, in the lottery process in S2, if it is determined that the trigger symbol 40 is stopped and displayed on the activated pay line L, the bonus game is won (S4: YES), thus, procedure shifts to S5. In S5, a flag which indicates that the bonus game is realized and is retained in the RAM 52 is set. At that time, for example, a message "START BONUS GAME !" is displayed on the lower liquid crystal display 4. Thereby, it is informed to the player that the bonus game is realized, thereafter the bonus game process is conducted (S5). In the bonus game process, it is conducted a so-called free game that the symbol columns 31 ~ 33 are sequentially variably moved and stopped and displayed without consuming credits, according to the game number of times set in the lottery, and credits corresponding to the payout are paid out.

On the other hand, if the trigger of the bonus game is not won (S4: NO), the main process program is terminated.

Here, in the slot machine 1 according to the embodiment, even while the slot game is executed, the player can participate in the roulette game executed in the roulette game machine 100. The process of this roulette game will be described in detail hereinafter.

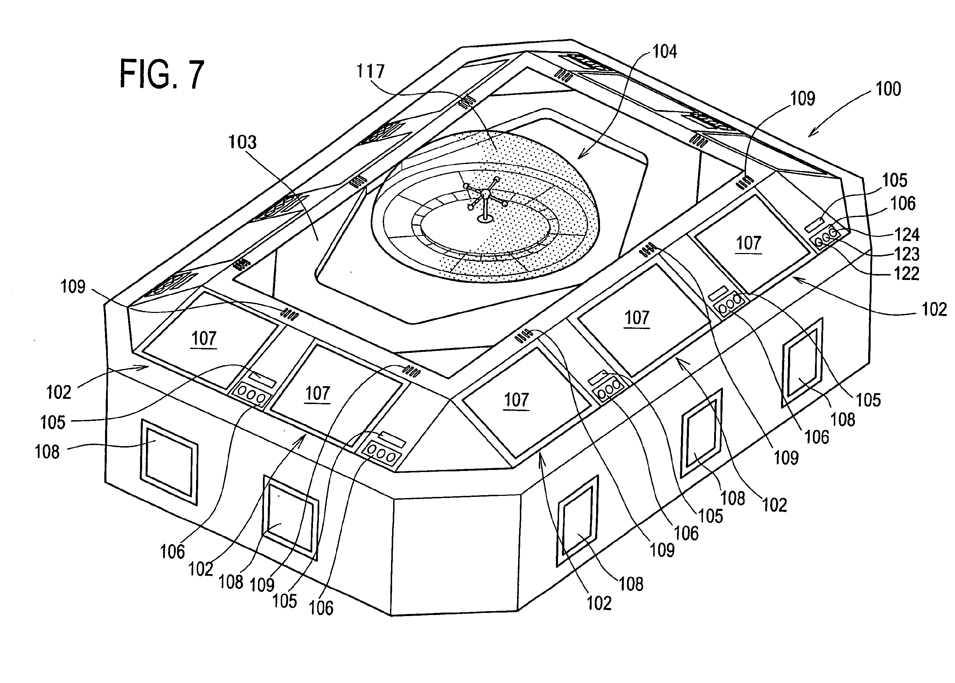

Next, the roulette game machine 100 constructing the gaming system 200 according to the embodiment will be described with reference to the drawings. Fig. 7 is an outline perspective view of the roulette game machine 100.

As shown in Fig. 7, the roulette game machine 100 is basically constructed from a cabinet 103 becoming a base body, a roulette wheel 104 arranged at a substantially central position on an upper plane of the cabinet and a plurality of satellites 102 (ten satellites in the embodiment) arranged around the roulette wheel 104 so as to surround the roulette wheel 104.

Here, the satellite 102 is a play area for the player to bet game media such as medals while predicting a game result, and a single satellite 102 or plural satellites 201 are arranged for a medal gaming machine such as the roulette game machine, a card game machine and the like. And the satellite 102 is constructed from at least a medal acceptance device 105 in which the game media such as coins or medals used in the game are inserted, a control portion 106 with plural control buttons trough which the player inputs predetermined instructions and an image display device 107 for displaying images concerning with the game.

The player operates control portion 106 in the satellite 102 while seeing images displayed on the image display device 107, thereby he player can progress the game developed on the image display device 107.

And at a side plane of the cabinet 103 where each of the satellites 102 is arranged, a medal payout opening 108 is formed respectively. Further, at an upper right position of the image display device 107 in each of the satellites 102, a speaker 109 is provided respectively.

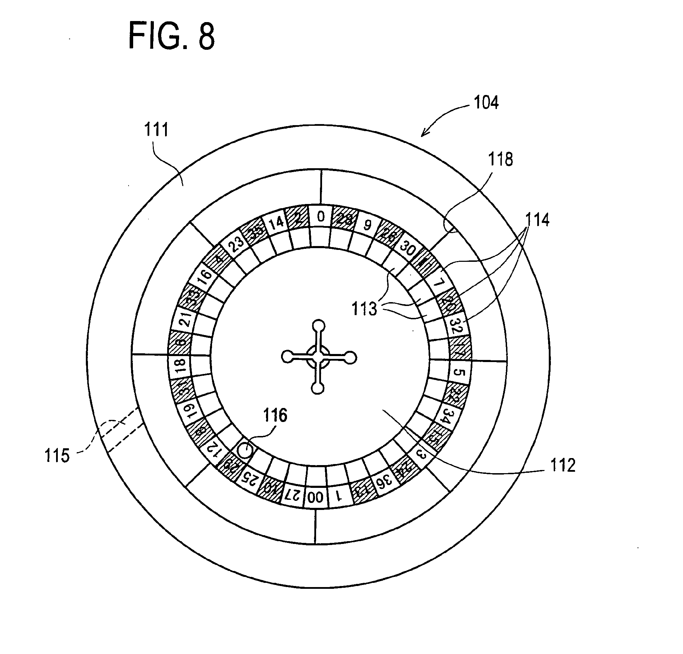

Next, a construction of the roulette wheel 104 according to the embodiment will be described with reference to Fig. 8. Fig. 8 is a plan view of the roulette wheel according to the embodiment.

As shown in Fig. 8, the roulette wheel 104 is basically constructed from a frame member 111 fixed on the cabinet 103 and a rotational wheel 112 which is rotatably received and supported within the frame member 111. And on the rotational wheel 112, many ball reception concave recesses 113 are formed (38 recesses in the embodiment). Further, on the upper surface of the rotational wheel 112 in an outer direction of each of the ball reception concave recesses 113, there are arranged number display plates 114 on each of which one of numbers "0", "00", "1" ~ "36" is described so as to correspond to each of the ball reception concave recesses 113.

And a ball throwing passage 115 is formed within the frame member 111. To the ball throwing passage 115, a ball throwing device (not shown) is connected, and when the ball throwing device is driven, a ball 116 is inserted on the rotational wheel 112 through the ball throwing passage 115. And whole upper portion of the roulette wheel 104 is covered by a hemispherical cover member 117 which is made of transparent acrylic resin.

Here, the frame member 111 is gradually inclined toward the inner direction and a guide wall 118 is formed at the intermediate position of the frame member 111. The guide wall 118 functions so that the ball 116 is guided and rolled against the centrifugal force. And when rotation speed of the ball 116 becomes weak and the centrifugal force thereof vanishes, the ball 116 rolls down on the inclined surface of the frame member 111 and moves toward the inner direction and reaches to the rotational wheel 112 which is rotating.

Further, the ball 116 rolls on the rotational wheel 112 and passes through the number display plate 14, thereby the ball 116 is received in any of the ball reception concave recesses 113. The number described on the number display plate 114 corresponding to the ball reception concave recess 113 in which the ball 116 is received, becomes the winning number.

And a winning determination device (not shown) is arranged under the roulette wheel 104. The winning determination device is a device to determine in which ball reception concave recess 113 the ball 116 is received. Further, under the rotational wheel 112, a ball collection device (not shown) is arranged. This ball collection device is a device to collect the ball 116 on the rotational wheel 112 after the game is terminated. Here, the ball throwing device, the winning determination device and the ball collection device are already well-known, thus explanation thereof will be omitted.

Next, construction of the control portion 106 and the image display device 107 of the embodiment will be described.

As shown in Fig. 7, the control portion 106 is provided at the side of the image display device 107 in the satellite 102, and buttons operated by the player are arranged in the control portion 106. Concretely, in the control portion 106, a BET confirmation button 122, a cashout button 123 and a help button 124 (see Fig, 11) are provided form the left side in order when seeing from a position opposite to the satellite 102.

The BET confirmation button 122 is a button which is pressed when the player confirms the bet after bet operation is done through the image display device 107 mentioned later. And in a case that the bet is decided and the player has betted to the number described on the number display plate 114 corresponding to the ball reception concave recess 113 on the roulette wheel 104 in which the ball 116 is received during the game, winning can be obtained. If the player won the game, credits corresponding to the number of chips betted are added to the credits retained at present by the player. Here, bet operation will be described in detail hereinafter.

The cashout button 123 is a button which is pressed when the game is terminated, and when the cashout button 123 is pressed, medals (generally, one medal corresponds to one credit) corresponding to credits obtained in the game and retained at present by the player are paid out from the medal payout opening 108.

The help button 124 is a button which is pressed when the operation method of the game and the like cannot be understood, and when the help button 124 is pressed, a help screen indicating various operation information is displayed on the image display device 107 right after the operation of the help button 124.

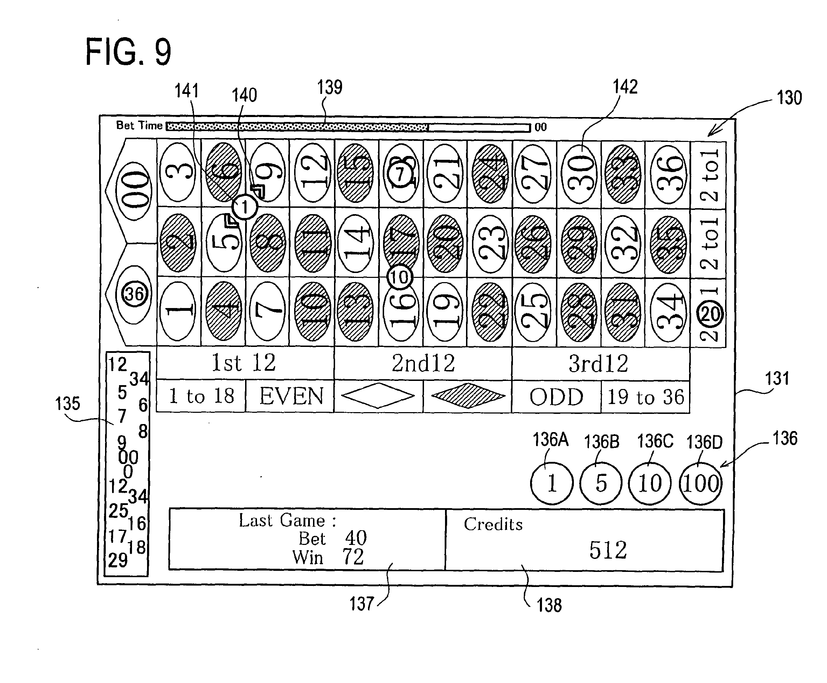

On the other hand, the image display device 107 is a liquid crystal display with a touch panel 128 arranged on the front plane of the liquid crystal display, and icons displayed on the liquid crystal display can be selected by pressing through the finger. Fig. 9 is an explanatory view showing one example of the display screen displayed on the image display device during the game.

As shown in Fig. 9, during the game conducted in the roulette game machine 100, a BET screen 131 with a betting board 130 is displayed on the image display device 107. And the player can bet chips on the BET screen 131 by using credits retained.

Here, the BET screen 131 will be described according to Fig. 9. On the betting board 130 displayed on the BET screen 131, the numbers as same as the numbers "0", "00", "1" ~ "36" are arranged and displayed in a lattice. And specific BET areas for betting chips while directing "odd number", "even number", "kinds of colors (red and black) of the number display plate" and "predetermined number range (for example, "1" ~ "12") are also arranged in a lattice. Here, there are provided BET areas 142 in the betting board 130. Each BET area 142, in which one of the numbers as same as the numbers "0", "00", "1" ~ "36" displayed on the number display plates 114 is displayed, has a number display portion 142A. The number display portion 142A is a portion in which one of the numbers as same as the numbers "0", "00", "1" ~ "36" displayed on the number display plates 114 is displayed.

And below the betting board 130, a result history display portion 135, BET buttons (136A, 136B, 136C, 136D) each of which is used to bet a predetermined number of medals, a cashout result display portion 137 and a credit number display portion 138 are displayed.

In the result history display portion 135, there are displayed in a list manner results of winning numbers obtained during games after the previous game is terminated. Here, one game means a series of operations that the player bets in each of the satellites 102, the ball 116 falls in the ball reception concave recess 113 and credits are paid out based on the winning number. At that time, after one game is terminated, a new winning number is added and displayed from the upper position, thereby the history of the winning numbers obtained during the maximum number of games (16 games) can be confirmed.

Further, the BET button 136 is a button to select the number of chips betted to the BET area 142 (on lattice area of the number and mark, on line forming the lattice) directed by the player. As the BET button 136, there exist four kinds of BET buttons such as a 1 BET button 136A, a 5 BET button 136B, a 10 BET button 136C and a 100 BET button 136D.

At first, the player directly presses the BET area 142 to be betted by the finger and directs it by a cursor 140 mentioned later. Under such state, when the player presses the 1 BET button 136A, the player can bet one chip every one press operation. For example, every the player presses the 1 BET button 136A one time, the bet number increases such as "1"→"2"→"3"→···. And when the player presses the 5 BET button 136B, the player can bet five chips every one press operation. For example, every the player presses the 5 BET button 136B one time, the bet number increases such as "5"→"10"→"15"→···. And when the player presses the 10 BET button 136C, the player can bet ten chips every one press operation. For example, every the player presses the 10 BET button 136C one time, the bet number increases such as "10"→"20"→"30"→···. Further, when the player presses the 100 BET button 136D, the player can bet one hundred chips every one press operation. For example, every the player presses the 100 BET button 136D one time, the bet number increases such as "100"→"200"→"300"→···.

Therefore, if many chips are betted, bet operation can be simplified.

And in the cashout result display portion 137, the bet number of chips betted in the previous game by the player and the credit number paid out are displayed. Here, the number obtained by subtracting the bet number from the cashout credit number is the credit number newly obtained in the previous game by the player.

Further, in the credit number display portion 138, the credit number retained at present by the player is displayed. This credit number decreases corresponding to the bet number (one credit for one chip) when chips are betted. And if the number betted is won and credits are paid out, the credit number corresponding to the paid out number increases. Here, if the credit number retained by the player becomes zero (0), the game is terminated.

And at the upper position of the betting board 130, a BET timer graph 139 is formed. The BET timer graph 139 is a graph indicating a remaining time according to which the player can bet. A red graph gradually starts to extend toward the right direction since the bet time starts. And when such graph extends to the most right position, the bet time bettable in the present game is terminated. When the graph extends to a specific position (for example, the position that length of the graph becomes 2/3 of the full length), the ball 116 is thrown in the roulette wheel 104 by the ball throwing device.

And on the betting board 130, the cursor 140 indicating the BET area 142 selected at present by the player is displayed. Further, a chip mark 141 indicating the chip number betted up to the present time and the BET area 142 is displayed. The number displayed in the chip mark 141 indicates the bet number of chips. For example, as shown in Fig. 9, the chip mark 141 of "7" put on the lattice "18" indicates that seven chips are betted to the number "18". As mentioned, the method to bet to one number is a bet method called as "straight up".

And the chip mark 141 of "1" put on the cross point of lattices of "5", "6", "8" and "9" indicates that one chips is betted so as to cover four numbers of "5", "6", "8" and "9". Here, the method to bet so as to cover four numbers is a bet method called as "corner bet".

As the other bet methods, there exist "split bet" to bet on the line between two numbers so as to cover two numbers, "street bet" to bet to the end of the horizontal line (in Fig. 9, vertical line) of three numbers so as to cover three numbers (for example, "13", "14", "15"), "five bet" to bet on the line between the number "00" and "3" so as to cover five numbers of "0", "00", "12, "2" and "3", "line bet" to bet among the numbers in two horizontal lines (in Fig. 9, two vertical lines) so as to cover six numbers (for example, "13", "14", "15" "16" "17" and "18"), "column bet" to bet on the lattice described as "2 to 1" so as to cover twelve numbers, and "dozen bet" so bet on each of the lattices described as "1st 12", "2nd 12" and "3rd 12" so as to cover twelve numbers. Further, there are bet methods by using six lattices ("1 to 18" indicating that the number is smaller than 18, "EVEN" indicating that the number is even number, "RED" indicating that the color of the number display plate is red, "BLACK" indicating that the color of the number display plate is black, "ODD" indicating that the number is odd number, "19 to 36" indicating that the number is larger than 19) formed on the lowermost step of the betting board 130 so as to cover 18 numbers.

As mentioned, when the player generally bets on the BET screen 131, the player first directly presses and directs the BET area 142 (on lattice area of the number and mark, on line forming the lattice) by the finger. As a result, the cursor 141 is moved to the BET area 142 directed.

Thereafter, the player presses the BET buttons 136 (1 BET button 136A, 5 BET button 136B, 10 BET button 136C and 100 BET button 136D), thereby chips corresponding to the bet number according to the BET buttons 136 are betted to the BET area 142 directed. For example, if the 10 BET button 136C is pressed four times, the 5 BET button 136B is pressed one time and the 1 BET button 136A is pressed three times, 48 chips can be totally betted.

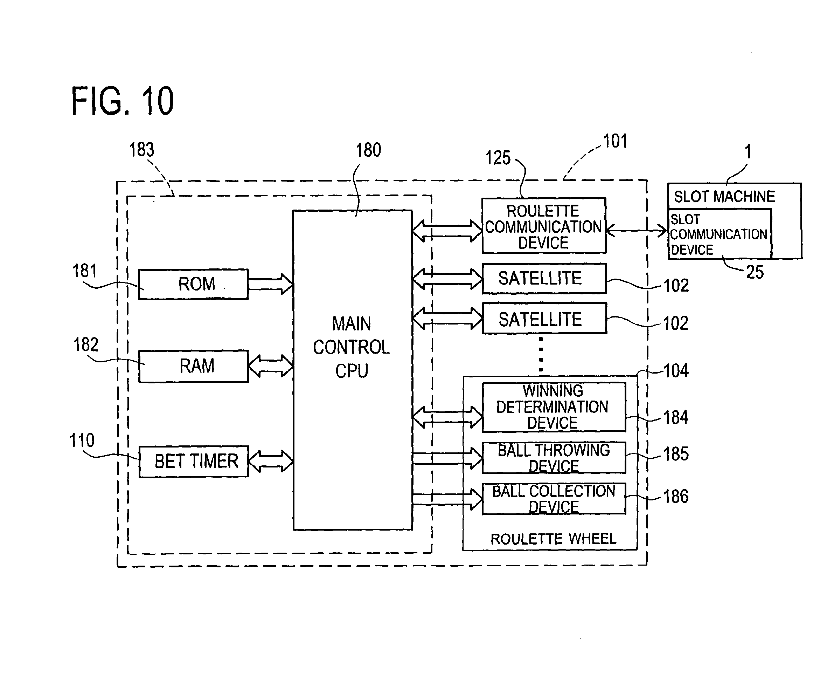

Next, a construction of the control system in the roulette game machine 100 will be described with reference to Fig. 10. Fig 10 is a block diagram schematically showing the control system of the roulette game machine 100.

As shown in Fig. 10, the roulette game machine 100 is constructed from a main control portion 183 including a main control CPU 180, a ROM 181 and a RAM 182, the roulette wheel 104 connected to the main control portion 183 and ten satellites 102 (see Fig. 1). Here, the control system of the satellite 102 will be described in detail hereinafter.

The main control CPU 180 conducts various processes based on input signals supplied form each of the satellites 102 and the slot machines 1, data and programs stored in the ROM 181 and the RAM 182, and the main CPU 180 transmits command signals to the satellites 102 and the slot machines 1 based on a result in the processes. Thereby, the main control CPU 180 mainly controls each of the satellites 102 and the slot machines 1, and progresses the roulette game. Further, the main CPU 180 controls the winning determination device 184, the ball throwing device 185, the ball collection device 186 provided in the roulette wheel 104, thereby the main CPU 180 conducts throwing of the ball 116 to the roulette wheel 104, collection of the ball 116 from the roulette wheel 104 and determination of wining number of the ball reception concave recess 113 in which the ball 116 falls.

The ROM 181 is, for example, constructed from a semiconductor memory and stores programs for realizing basic functions of the roulette game machine 100, programs for controlling each of the devices in the roulette wheel 104, odds (payout number of credits corresponding to the winning) corresponding to each of the BET areas 142 and programs for mainly controlling each of the satellites 102.

On the other hand, the RAM 182 temporarily stores the bet information of chips supplied from each of the satellites 102, the winning number data determined by the winning determination device 184 and data concerning with the result of processes executed by the main control CPU 180. And in the RAM 182, the game result (for example, winning numbers) in the roulette game is stored as the history data.

And to the main control CPU 180, the winning determination device 184 provided in the roulette wheel 104, the ball throwing device 185 and the ball collection device 186 are connected. Further, to the main control CPU 180, a bet timer 110 to count a bet time is connected. This bet timer 110 starts to count the bet time according to start of the bet time and is used when the ball is thrown in based on that a predetermined time elapses and when the bet acceptance is closed up after a time limit elapses. Therefore, display of the BET timer graph 139 at the satellite 102 is changed corresponding to a numeral value counted by the bet timer 110.

Here, timer data of the bet timer 110 are voluntarily transmitted to each of the satellites 102 and all of the slot machines 1 constructing the gaming system 200.

Further, in a case that the bet time for the player in each of the satellites 102 elapses to some extent, that is, if the timer graph 139 of the BET screen 131 reaches to the specific position (for example, the position that length of the graph becomes 2/3 of the full length), the ball throwing device 185 is driven and the ball 116 is thrown in the roulette wheel 104.

Further, when the rotation speed of the ball 116 gradually becomes weak and the centrifugal force thereof vanishes, and the ball 116 rolls down on the inclined surface of the frame member 111 and falls in the ball reception concave recess 113, the winning determination device 184 determines the winning number described on the number display plate 114 corresponding to the ball reception concave recess 113 in which the ball 116 is received. The determination result is transmitted to the main control CPU 180. Thereafter, the ball collection device 186 is driven and the ball 116 is collected from the roulette wheel 104.

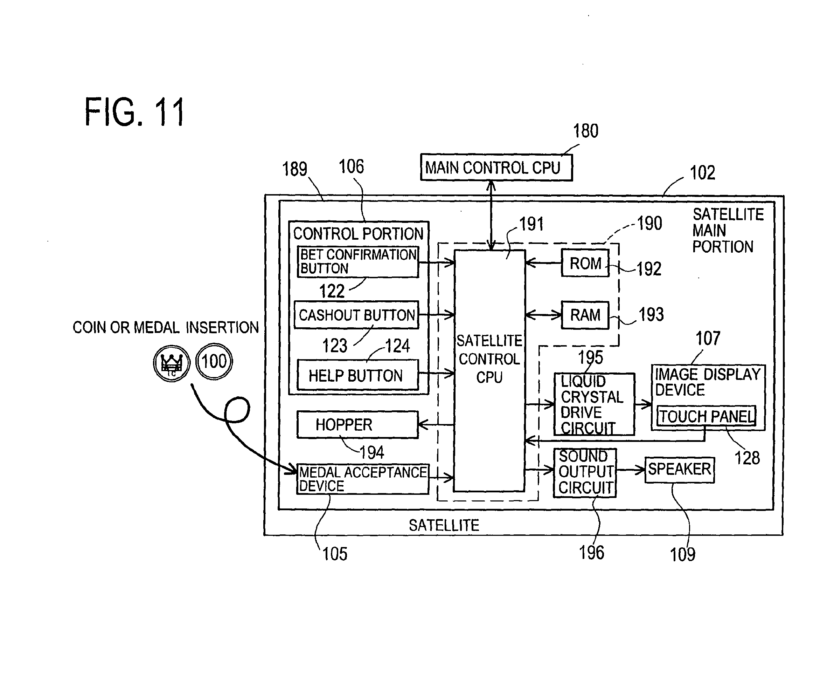

Next, a construction of the control system in the satellite 102 connected to the main control CPU 180 will be described with reference to Fig. 11. Fig. 11 is a block diagram schematically showing the control system of the satellite 102 according to the embodiment. Here, each of ten satellites 102 has the same construction, thus one satellite 102 will be described hereinafter.

As shown in Fig. 11, the satellite 102 is basically constructed from a main portion 189 in which the image display device 107 and the other devices are provided and a medal acceptance device 105 is provided in the main portion 189. Further, the main portion 189 is basically constructed from a satellite control portion 190 and several peripheral devices. The satellite control portion 190 has a satellite control CPU 191, a ROM 192 and a RAM 193. The ROM 192 is, for example, constructed from a semiconductor memory, and in the ROM 192, programs to realize basic function of the satellite 102, the other various programs necessary for control of the satellite 102 and data tables are stored. And the RAM 193 is a memory to temporarily store various data calculated by the satellite control CPU 191, the credit number retained at present by the player and the bet state of chips by the player.

And to the satellite control CPU 191, the BET confirmation button 122, the cashout button 123 and the help button 124 all of which are provided in the control portion 106 (see Fig. 7), are respectively connected. Further, the satellite CPU 191 conducts control to execute various operations based on operation signals output by press of each of buttons.

Concretely, based on the input signal supplied from the control portion 106 corresponding to operation by the player, and data and programs stored in the ROM 192 and the RAM 193, the satellite control CPU 191 conducts various processes and transmits the result of processes to the main control CPU 180 in the roulette game machine 100.

On the other hand, the satellite control CPU 191 receives the command signal from the main control CPU 180 and controls the periphery devices constructing the satellite 102, thereby progresses the roulette game in the satellite 102. And depending on process contents, the satellite control CPU 191 executes various processes based on the input signal input from the control portion 106 on the basis of operation by the player and data and programs stored in the ROM 192 and the RAM 193. And based on the result thereof, the satellite control CPU 191 controls the periphery devices constructing the satellite 102, thereby progresses the roulette game in the satellite 102, Here, as for which method is used to conduct processes, such method is set every process according to process contents. For example, the payout process of medals corresponding to the winning number is done by the former method, and bet operation process on the BET screen 131 by the player is done by the latter method.

And to the satellite control CPU 191, a hopper 194 is connected. The hopper 194 pays out a predetermined number of medals through the medal payout opening 108 (see Fig. 7) according to the command signal output from the satellite control CPU 191.

Further, to the satellite control CPU 191, the image display device 107 is connected through a liquid crystal drive circuit 195. Here, the liquid crystal drive circuit 195 is constructed from a program ROM, an image ROM, an image control CPU, a work RAM, a VDP (video display processor) and a video RAM. And in the program ROM there are stored an image control program for controlling display of the image display device 107 and various selection tables. And in the image ROM, for example, there are stored dot data for forming images displayed on the image display device 107. And the image control CPU determines the images displayed on the image display device 107 among the dot data stored beforehand in the image ROM, according to the image control program stored beforehand in the program ROM based on parameters set by the satellite control CPU 191. Further, the work RAM functions as a temporary memory when the image control program is executed by the image control CPU. And the VDP forms images corresponding to display contents determined by the image control CPU and outputs such images to the image display device 107. Here, the video RAM functions as a temporary memory when images are formed by the VDP.

And the touch panel 128 is arranged on the front plane of the image display device 107, and operation information of the touch panel 128 is transmitted to the satellite control CPU 191. On the touch panel 128, the bet operation of chips by the player is done on the BET screen 131. Concretely, selection of the BET area 142 and operation of the BET buttons 136 are conducted through the touch panel 128, and such operation information is transmitted to the satellite control CPU 191. And based on such information, the bet information at present by the player is voluntarily stored in a bet information memory area 193A formed in the RAM 193. Further, such bet information is transmitted to the main control CPU 180.

Further, to the satellite control CPU 191, a sound output circuit 196 and a speaker 109 are connected, and the speaker 109 outputs various effect sounds when various effects are conducted based on the output signal from the sound output circuit 196.

And to the satellite control CPU 91, the medal acceptance device 105 is connected. The medal acceptance device 105 is a device to inserting game media such as coins or medals when the player plays the game.

Further, the medal acceptance device 105 transmits a credit signal, which is the information concerning with the credit number added on the basis of the game media such as coins or medals inserted in the medal acceptance device 105, to the satellite control CPU 191. The satellite control CPU 191 increases the credit number of the player stored in a credit number memory area 193B in the RAM 193, based on the credit signal transmitted from the medal acceptance device 105.

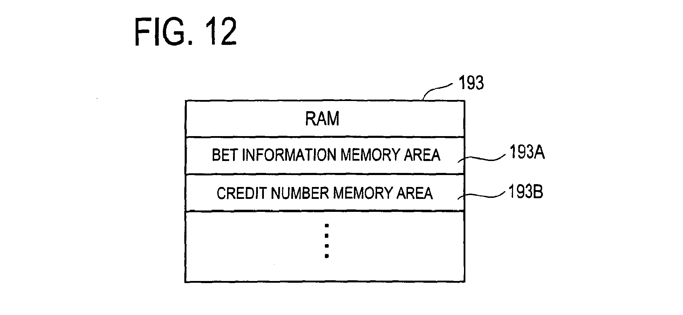

And as shown in Fig. 12, in the RAM 193, there are provided the bet information memory area 193A in which the bet information of the player playing the game is stored and the credit number memory area 193B in which the credit number retained at present by the player is stored.

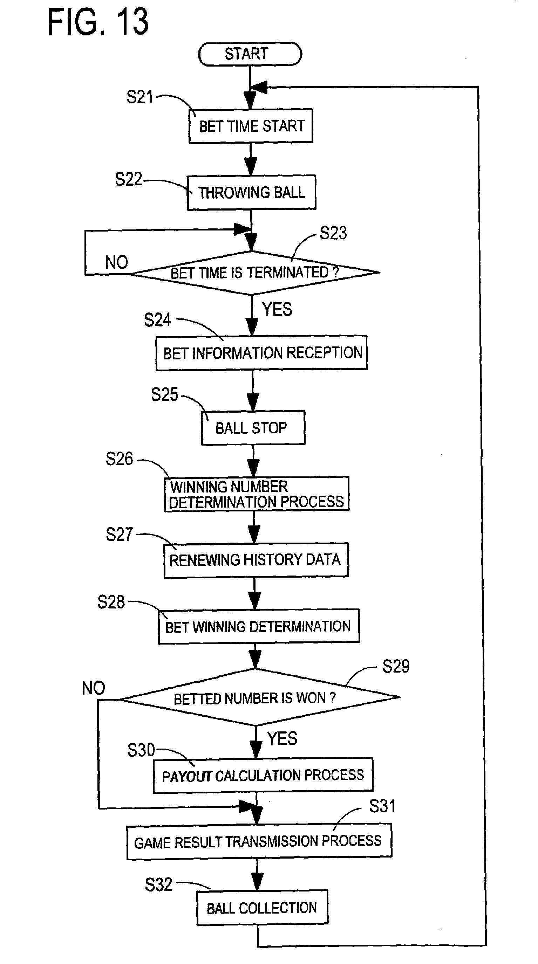

Next, the main process program executed in the roulette game machine 100 will be described with reference to Fig. 13. Fig. 13 is a flowchart of the roulette game process program executed in the roulette game machine 100. Here, each of the programs indicated by the flowchart in Fig. 13 is stored in the ROM 18 and the RAM 182 provided in the roulette game machine 100, and such programs are executed by the main control CPU 180.

When an electric power source of the roulette game machine 100 according to the embodiment is switched on, the BET screen 131 shown in Fig. 9 is first displayed on the image display device 107 in each of the satellites 102, and it is realized a state that the player can bet chips.

Here, the other players can participate in such game while the game is conducted. That is to say, in the roulette game machine 100 of the embodiment, in addition to the maximum ten players corresponding to the number of the satellite 102, the players corresponding to the number of the slot machine 1 constructing the gaming system 200 can also participate in the roulette game.

That is to say, based on that the electric power source of the roulette game machine 100 is switched on, the main process program of the roulette game machine 100 is executed, and the bet time during which the player can bet on voluntary BET area 142 is started (S21). If the bet time is started, the BET timer graph 139 with red color displaying the remaining time during which the player can bet, gradually extends to the right direction according to that the bet time elapses. And the player participating in the game can operate the touch panel 128 and bet chips to the BET area 142 corresponding to the number predicted by the player during the remaining time (see Fig. 9). Here, the concrete bet method by using the BET screen 131 is already explained, thus explanation of such bet method will be omitted.

And based on that a predetermined time (in the embodiment, time elapses till the BET timer graph 139 reaches to 2/3 of full length) elapses since the bet time is started (S21), the ball throwing device 185 is driven and the ball 116 is thrown in the roulette wheel 104 (S22).

Next, it is determined whether or not the bet time is terminated in S23. Here, the bet time is indicated by the BET timer graph 139. Therefore, when the red graph gradually extending to the right direction from start of the bet time (S21) reaches to the most right position, the bet time in the present game is terminated.

Here, before the bet time is terminated (S23: NO), bet acceptance is continuously done till the bet time is terminated. On the other hand, if the bet time is terminated (S23: YES), the bet termination signal is output to the satellite control portion 190 in each of all satellites 102. Thereby, the image indicating that the bet time is terminated is displayed on the image display device 107 of each satellite 102, and operation of the touch panel 128 is inhibited.

The main control CPU 180 terminates the bet time and outputs the bet termination signal to all of the satellites 102 and to the slot machines 1 (S23: YES), thereafter receives the bet information (information concerning with the BET area 142 directed by the player and the number of chips betted to the BET area 142) corresponding to bet operation done by the player in each of the satellites 102 and slot machines 1 (S24). And such bet information is stored in the RAM 182.

Here, if the bet operation is not done to the BET area 142 in the satellite 102, the main control CPU 180 receives the information indicating that no direction of the BET area 142 is done and the number of chips betted is "0", as the bet information. Here, as for the slot machines 1, the process similar to the above is conducted.

The ball 116 thrown in S2 rolls on the roulette wheel 104 along the guide wall 118 while processes in S23 and S24 are conducted, thereafter if the rotation speed of the ball 116 becomes weak and the centrifugal force thereof vanishes, the ball 116 rolls down on the inclined surface of the frame member 111 and moves toward inner side, further reaches to the rotational wheel 112 which is rotating (see Fig. 8).

And the ball 116 rolls on the rotational wheel 112 and passes through one of the number display plates 114 formed at the outside of the rotational wheel 112 rotating, the ball 116 is received in any one of the ball reception concave recesses 113 and stopped (S25). At that time, the number (any one of "0", "00", "1" - "36") described on the number display plate 114 corresponding to the ball reception concave recess 113 in which the ball 116 is received, becomes the winning number.

Next, after the ball 116 is received in the ball reception concave recess 113, the main control CPU 180 drives the winning determination device 184 and determines the number corresponding to the ball reception concave recess 113 in which the ball 116 is received (S26).

In S27, the history data of the game result (winning number) stored in the RAM 182 is renewed. That is to say, in S26, the number data determined as the winning number in S26 is added to the history data and the oldest winning number data is deleted from the history data. After the history data is renewed, procedure shifts to S28.

Further, based on the bet information of each satellite 102 and the slot machine 1 received in S4 and the winning number determined in S6, it is determined whether or not the number betted in each of the satellites 102 and the slot machines 1 is won (S28).

And on the basis of the winning determination conducted in S28, it is determined whether or not the number betted in at least one of the satellites 102 or the slot machines 1 is won (S29). If it is determined that the number betted is won (S29: YES), the main control CPU 180 executes the payout calculation process (S30).

In the payout calculation process, chips betted to the winning number are recognized every satellite 102 and slot machine 1 and sum of payout of credits paid out to each of the satellites 102 and the slot machines 1 is calculated, by using odds (credit number paid out every one chip) for each of the BET areas 142 stored in the ROM 181. Procedure shifts to S31.

On the other hand, if it is determined that there is no winning number among the numbers betted in all of the satellites 102 and the slot machines 1 (S29: NO), procedure shifts to S31.

In S31, it is executed the game result transmission process in which signals concerning with the payout of credits based on the payout calculation process done in S30 and concerning with display change according to determination of the winning number are output to all of the satellites 102 and the slot machines 1.

When credits are paid out to the satellite 102 and the slot machine 1, credit data corresponding to the payout are output to the satellite control portion 190 of the satellite 102 in which the roulette game is won and the CPU 50 of the slot machine 1 in which the roulette game is won from the main control portion 183. This credit data are added in the RAM 193 of the satellite 102 and the RAM 52 of the slot machine 1.

On the other hand, in S27, since the history data stored in the RAM 182 are renewed, the display change signal according to the renewal of the history data is transmitted to all of the satellites 102 and the slot machines 1. Concretely, the signal to renew the display contents of the result history display portion 135 is transmitted. At that time, the history data stored in the RAM 182 are also transmitted to all of the satellites 102 and the slot machines 1.

In S32, the ball collection device arranged under the rotational wheel 112 is driven and the ball 116 on the rotational wheel 112 is collected. The ball 116 collected is again thrown in the roulette wheel 104 in the next games. Thereafter, procedure returns to S21 and the next game is executed.

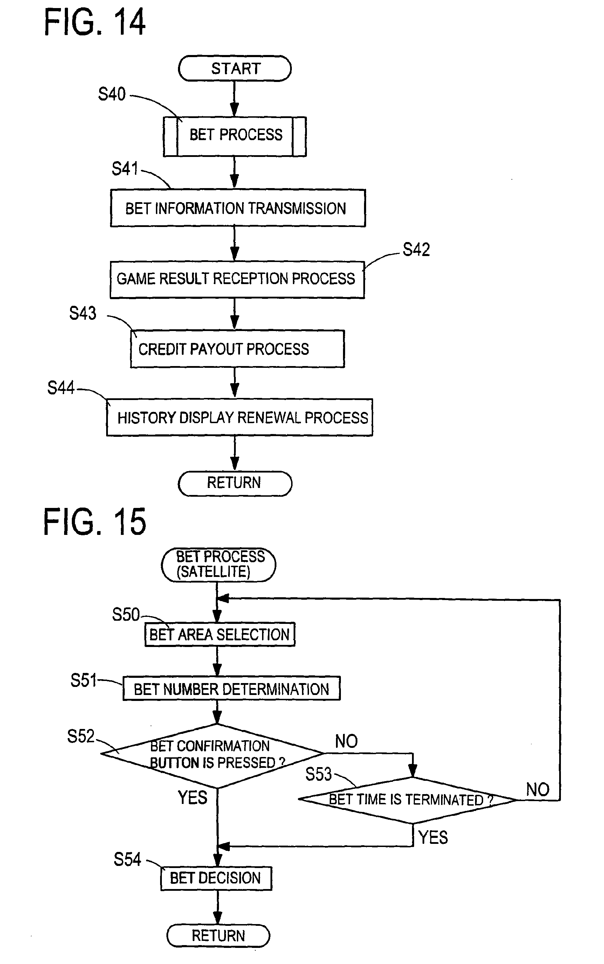

Next, the main process program in the satellite 102 will be described with reference to Fig. 14. Fig. 14 is a flowchart of the main process program in the satellite. Each program indicated by the flowchart in Fig. 14 is stored in the ROM 192 and the RAM 193 provided in the satellite 102, and is executed by the satellite control CPU 191.

At first, in S40, the satellite control CPU 191 conducts the bet process of chips through the BET screen 131. This bet process (S40) will be described in detail hereinafter, thus explanation thereof will be omitted here.

Next, in S41, the bet information (information of the BET area 142 directed and the bet number directed to the BET area 142) obtained in the bet process (S40) is transmitted to the main control CPU 180 (see Fig. 10) of the main control portion 183.

On the other hand, as mentioned in the above, the main control CPU 180 of the roulette game machine 100 stores the bet information transmitted in the RAM 182 (S24). Here, in the bet process (S40), the bet information transmitted to the main control CPU 180 is stored in the bet information memory area 193A of the RAM 193 in the satellite 102.

Thereafter, in the roulette game machine 100, the roulette game is started on the roulette wheel 104 and the winning number corresponding to the ball reception concave recess 113 in which the ball 116 falls is detected by the winning determination device 184 (see Fig. 10).

In S42, the winning number determined in the roulette game machine 100, the credit number paid out to each satellite 102 and the history data stored in the RAM 182 are received and the history data received are stored in the RAM 193.

At that time, since the history data are renewed based on that the winning number is decided, the satellite 102 also receives the display change signal of the image display device 107 according to renewal of the history data. Concretely, the signal to renew display contents of the result history display portion 135 is received.

Next, based on the information received in S42, the payout of credits is done and credits retained at present by the player is added (S43). And the credit number stored in the credit number memory area 193B is changed, and at the same time, the cashout result display portion 137 indicating incomings and outgoings of credits in the previous game displayed on the image display device 107 and the credit display portion 138 (see Fig. 9) indicating the credit number at present are renewed.

And in S44, display contents of the history display of the winning number in the BET screen 131 are renewed. Concretely, display contents of the result history display portion 135 in the BET screen 131 are renewed.

In the result history display portion 135 renewed on the BET screen 135, the result of the winning numbers in the games previously done is displayed in a list. At that time, after one game is terminated, a new winning number is added and displayed from the upper position and the history of the winning numbers obtained in the maximum 16 games can be confirmed.

After the history display renewal process (S44) is finished, the main process program in the satellite 102 is terminated.

Next, the bet process executed by the satellite control CPU 191 will be described in detail with reference to Fig. 15. Fig. 15 is a flowchart of the bet process program. The program indicated in the flowchart of Fig. 15 is stored in the ROM 192 and the RAM 193 provided in the satellite 102, and is executed by the satellite control CPU 191.

When procedure shifts to the bet process (S40), the BET screen 131 is displayed on the image display device 107. As mentioned, on the BET display screen 131, the betting board 130 similar to the conventional betting board in which numbers and marks are arranged on the lattices, is displayed. Thereby, the player can bet chips based on the betting board of table type.

At first, in S50, the satellite control CPU 191 selects the BET area 142 where the chip mark 141 is displayed, based on that the touch panel 128 corresponding to the BET area 142 of the betting board 130 is pressed by the finger of the player. Here, the bet process (S31) on the BET screen 131 such as "straight up" and the like is already well-known, thus explanation thereof will be omitted.

Next, in S51, the bet number of chips when the bet operation is done is set to the BET area 142 selected in S50. The player presses each of the BET buttons 136 (1 BET button 136A, 5 BET button 136B, 10 BET button 136C and 100 BET button 136D), thereby chips corresponding each BET button are betted to the BET area 142 directed. And on the betting board 130, the number of chips betted up to the present time and the chip mark 141 indicating the BET area 142 are displayed. The bet number of chips is indicated by the number displayed on the chip mark 141 (see Fig. 9).

Here, the bet information (information concerning with the BET area 142 and the bet number directed) set according to the above process is voluntarily stored in the bet information memory area 193A of the RAM 193.

Next, in S52, it is determined by the satellite control CPU 191 whether or not the BET confirmation button 122 is pressed. The BET confirmation button 122 is arranged in the control portion 106 as shown in Fig. 7, and is pressed when a series of bet operations in S50, S51 are decided.

And if it is determined that the BET confirmation button 122 is pressed (S52: YES), the bet is decided. After the bet is decided, the bet operation (S50, S51) cannot be conducted till the next game is started. And after the bet is decided, if chips are betted to the number described on the number display plate 114 corresponding to the ball reception concave recess 113 in which the ball 116 is received on the roulette wheel 104 through which the game is started, the game is won.

And if it is determined that the BET confirmation button 122 is not pressed (S52: NO), further it is determined whether or not the bet time is terminated (S53). The bet time is displayed by the BET timer graph 139 formed at the upper position of the betting board 130. The BET timer graph 139 is a graph indicating the remaining time during which the player can bet, and the red graph starts to gradually extend toward the right direction after the game is started. And when the red graph extends to the most right position, the bet time is terminated.

If it is determined that the bet time is not terminated (S53: NO), that is, if the BET timer graph 139 does not extend to the most right position, procedure returns to S31 and the bet operation (S50) can be again executed. By repeating the bet operation (S50, S51), the bet operations (S50, S51) can be conducted at a plurality of positions on the betting board 130.

On the other hand, if it is determined that the bet time is terminated (S53: YES), the bet is decided on the basis of the present state (S54). After the bet is decided, the bet process program through the BET screen 131 is terminated, and procedure returns to the main process program of the satellite 102. Here, after the bet is decided, the bet operation (S50, S51) cannot be done till the next game is started.

As mentioned in the above, in the roulette game machine 100 of the embodiment, the player can participate in the roulette game from the satellite 102 and execute the roulette game.

Here, in the gaming system 200 according to the embodiment, the player can participate in the roulette game conducted in the roulette game machine 100 by using the slot machine 1.

Next, the process concerning with participation in and execution of the roulette game by using the slot machine 1 will be described with reference to Figs.

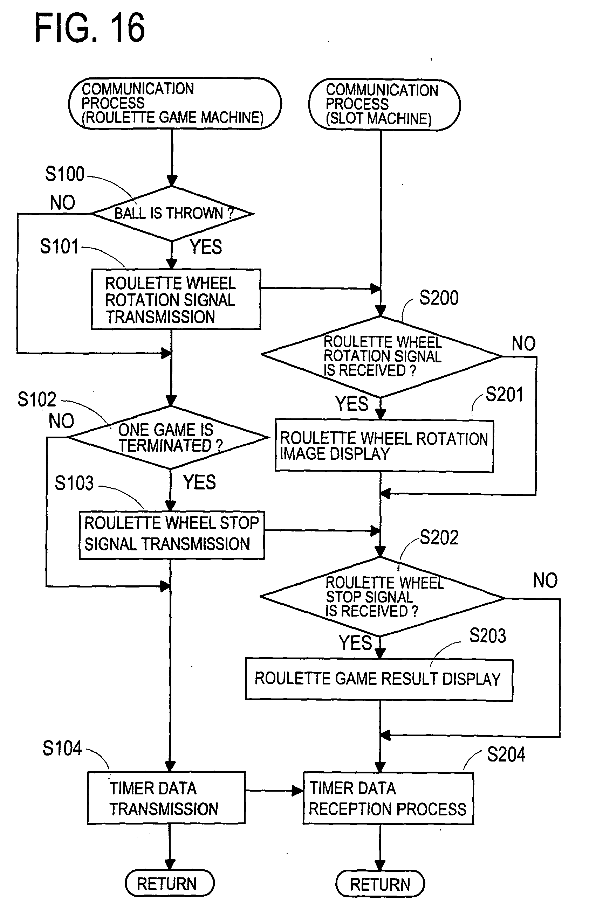

First, in a case that the main process program (see Fig. 13) of the roulette game machine 100 is executed by the main control CPU 180 in the roulette game machine 100, the communication process program executed while conducting interruption processes with a predetermined time interval will be described in detail with reference to Fig. 16. Fig. 16 is a flowchart of the communication process program for controlling communication process conducted between the slot machine 1 and the roulette game machine 100.

As shown in Fig. 16, when execution of the main process program of the main control portion 183 in the roulette game machine 100 is started, it is determined whether or not the ball 116 is thrown in the roulette wheel 104 (S 100). That is to say, determination in S100 is done based on whether or not the throwing process of the ball 116 (S22) is done by executing the main process program through the main control portion 183 of the roulette game machine 100.

If it is determined that the ball 116 is thrown in the roulette wheel 104 (S100: YES), the main control CPU 180 transmits the roulette wheel rotation signal indicating that the ball 116 is thrown and the rotational wheel 112 is rotating at present, to all of the slot machines 1 constructing the gaming system 200. On the other hand, if it is determined that the ball 116 is not thrown in the roulette wheel 104 (S100: NO), procedure shifts to S102.

Here, similar to the roulette game machine 100, in all of the slot machines 1 constructing the gaming system 200, not only the main process program (see Fig. 6) is executed but also the communication process program is executed while conducting interruption processes with a predetermined time interval by the CPU 50.

Therefore, as shown in Fig. 16, at first, the CPU 50 determines whether or not the roulette wheel rotation signal is received through the slot communication device 25. If it is determined that the roulette wheel rotation signal is received (S200: YES), procedure shifts to S201 and it is displayed on the upper liquid crystal display 3 the image indicating the state that the ball 116 is thrown in the roulette wheel 104 and the rotational wheel 112 is rotating (S201). On the other hand, if it is determined that the roulette wheel rotation signal is not received (S200: NO), procedure shifts to S202.

In S102 in the communication process conducted in the roulette game machine 100, it is determined whether or not one game is terminated. That is to say, the main control CPU 180 determines whether or not the winning number determination process (S26) in the main process program is done by the main control portion 183 of the roulette game machine 100. If it is determined that one roulette game is terminated (S102: YES), it is transmitted to all of the slot machines 1 constructing the gaming system 200 the roulette wheel stop signal indicating that the rotational wheel 112 is stopped and the winning number is decided (S103). On the other hand, if it is determined that one roulette game is not terminated (s102: NO), procedure shifts to S104.

Here, in the above mentioned roulette wheel stop signal, the information concerning with the winning number in the present roulette game is included. For example, in a case that the ball 116 is received in the ball reception concave recess 113 corresponding to the number display plate 114 with the number "29", it is transmitted as the roulette wheel stop signal to all of the slot machines 1 through the roulette transmission device 125 the information indicating that the winning number is "29", with the signal indicating that rotation of the rotational wheel 112 is stopped.

In the communication process in the slot machine 1, in S202 shifted after processes of S200 and S201 are finished, it is determined whether or not the roulette wheel stop signal is received through the slot communication device 25.

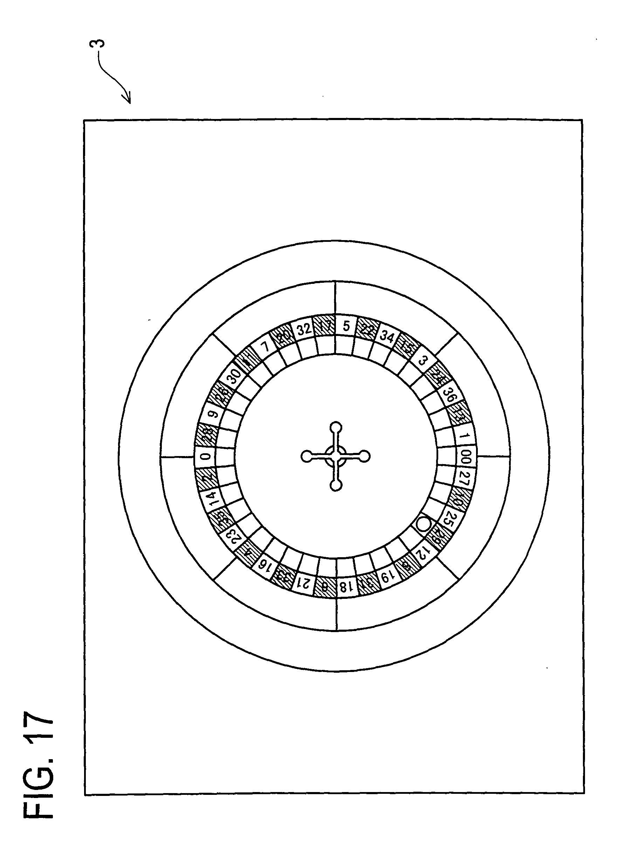

If it is determined that the roulette wheel stop signal is received (S202: YES), the state displayed on the upper liquid crystal display 3 indicating that "the rotational wheel 112 is rotating and the ball 116 is rolling" is changed to the state indicating that "the rotational wheel 112 is stopped and the ball 116 is received in the ball reception concave recess 113 (see Fig. 17)".

At that time, on the upper liquid crystal display 3, the ball 116 rolling on the roulette wheel 104 is stopped and displayed within the ball reception recess corresponding to the winning number, based on the information of the winning number added to the roulette wheel stop signal.

For example, in a case that the winning number "29" is added to the roulette wheel stop signal, as shown in Fig. 17, it is displayed on the upper liquid crystal display 3 the state indicating that the ball 116 is received in the ball reception recess 113 corresponding to the number display plate 114 with the number "29".

On the other hand, if it is determined that the roulette wheel stop signal is not received (S202: NO), procedure shifts to S204.

And in the roulette game machine 100, after processes of S102, S103 are conducted, the main control CPU 180 reads out the timer data from the timer 110 and transmits the timer data to all of the slot machines 1 constructing the gaming system 200 (S104). After the timer data are transmitted, execution of the communication process program in the roulette game machine 100 is terminated. Here, after a predetermined time elapses from termination of the communication process program, the communication process program is again executed while interruption processes are done against the main process program, thereby the above mentioned processes are repeated.

On the other hand, in the slot machine 1, in S204 to which procedure shifts after processes of S202 and S203, the reception process of the timer data (S104) transmitted from the roulette game machine 100 is conducted. In the timer data reception process (S204), the CPU 50 stores the timer data received through the slot communication device 25 in the RAM 52. Here, the timer data stored in the RAM 52 is used when control of the roulette game is conducted in the slot machine 1.

After the timer data are received and stored in the RAM 52, the CPU 50 terminates the communication process program. Here, after a predetermined time elapses from termination of the communication process program, the communication process program is again executed while interruption processes are done against the main process program of the slot machine 1, thereby the above mentioned processes are repeated.

As mentioned in the above, as shown in Fig. 16, the communication process program is executed while interruption processes are done with a predetermined time interval between each of the slot machines 1 constructing the gaming system 200 and the roulette game machine 100, thereby the state of the roulette game in the roulette game machine 100 is voluntarily displayed on the upper liquid crystal display 3. That is to say, while the slot game is conducted in the slot machine 1, the player can acknowledge the state of the roulette game in the roulette game machine 100.

In each of the slot machines 1 constructing the gaming system 200 of the embodiment, as mentioned, in addition to the slot game in the slot machine 1, the player can participate in the roulette game conducted in the roulette game machine 100 which is installed in the other place.

Here, control of operation to participate in the roulette game while playing the slot machine 1 will be described in detail with reference to the drawings.

At first, in the slot machine 1, the condition observation process program is executed while interruption processes are conducted with a predetermined time interval against the main process program of the slot machine 1, similar to the case of the above mentioned communication process program.

The condition observation process program is a program to observe the condition for displaying the betting board 90 on the lower liquid crystal display 4, the betting board 90 being used when the player participates in the roulette game in the slot machine 1.

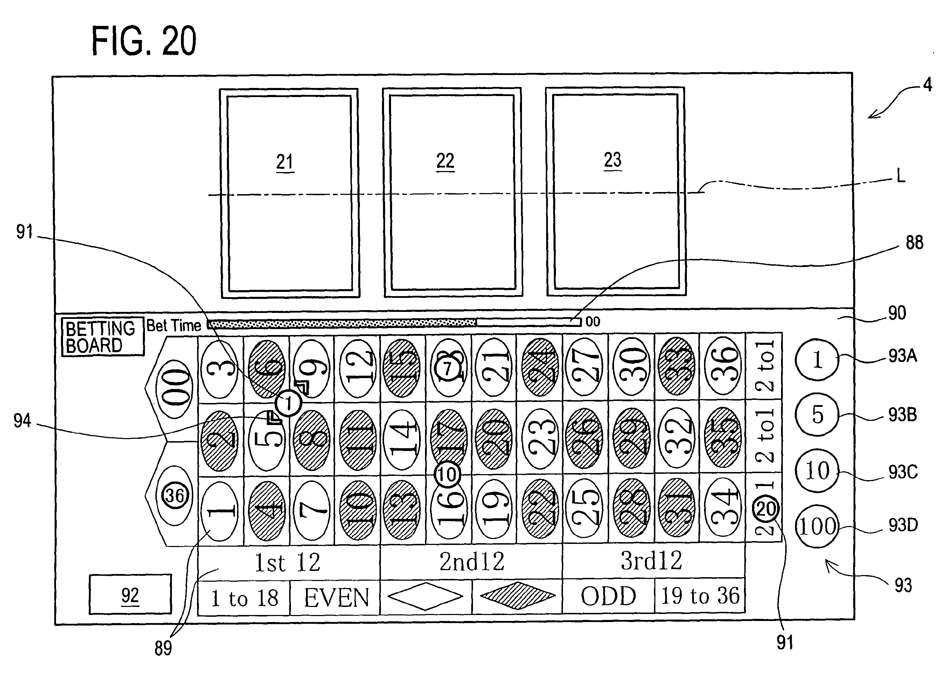

That is to say, in the slot machine 1, when the slot game is conducted, display of the slot game (variable display portions 21 ~ 23) is done on whole plane of the lower liquid crystal display 4. On the contrary, if a predetermined condition is satisfied by the condition observation program (if a specific operation is executed), the variable display portions 21 - 23 are moved to the upper position while being slightly reduced and the betting board 90 to conduct bet operation for the roulette game is displayed on substantial lower half of display area in the lower liquid crystal display 4 (see Fig. 20).

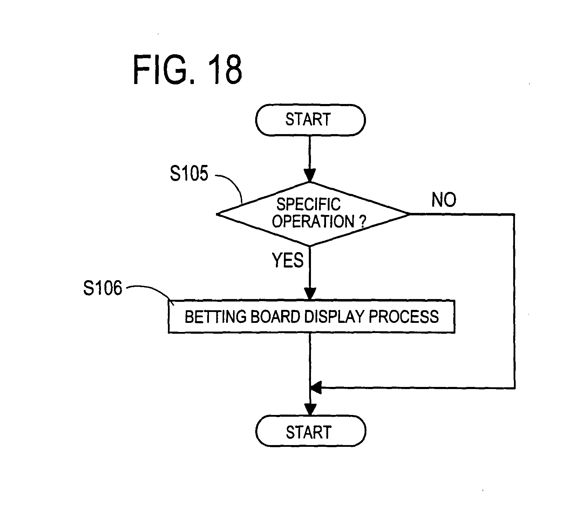

With reference to Figs. 18 to 20, the condition observation process program will be described in detail. When interruption processes are conducted against the main process program and execution of the condition observation process program is started, at first in S105, the CPU 50 determines whether or not the specific operation is executed.

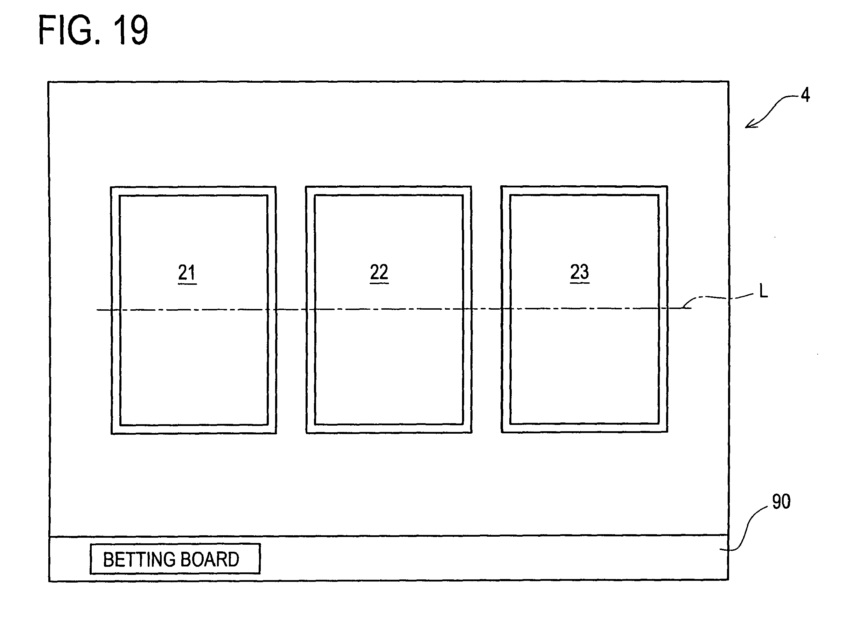

Here, the specific operation will be described with reference to Fig. 19. Fig. 19 is an explanatory view showing a display example 1 of the lower liquid crystal display 4 when the slot game is mainly conducted.

As shown in Fig. 19, in a case that the player mainly conducts the slot game, the variable display portions 21 ~ 23 used in the slot game are largely displayed by using most of the display area of the lower liquid crystal display 4. At that time, the betting board 90 used in the roulette game is small displayed in the lower position of the lower liquid crystal display 4.

Here, if th player wants to participate in the roulette game, the player conducts operation to pull up the display area of the betting board 90 while pressing such area by the finger. By conducting the operation so that the betting board 90, most of which is concealed on the lower liquid crystal display 4, is pulled up to the upper direction, the betting board 90 is displayed on the lower liquid crystal display 4 and the variable display portions 21 ~ 23 are slightly reduced and displayed at the upper display area (see display example shown in Fig. 20).

That is to say, the specific operation in the embodiment means "the operation to pull up the betting board 90 displayed small while pressing the display area of the betting board 90 by the finger".

In S105, the CPU 50 determines whether or not the specific operation is conducted based on the signal from the transparent touch panel 20 arranged on the front plane of the lower liquid crystal display 4. If it is determined that the specific operation is conducted (S105: YES), display of the betting board 90 on the lower liquid crystal display 4 is changed so that the bet operation can be done (S106), as mentioned in the above. After display of the betting board 90 on the lower liquid crystal display 4 is changed, the condition observation process program is terminated. On the other hand, if it is determined that the specific operation is not conducted (S105: NO), display of the betting board 90 on the liquid crystal display 4 is not changed and the condition observation process program is terminated.

And if a predetermined time elapses from termination of the condition observation process program, the CPU 50 again starts execution of the condition observation process program. Therefore, in the slot machine 1, while the main process program is executed, the condition observation process program is repeatedly executed while conducting interruption processes.

Here, in a case that the betting board 90 is displayed on the lower liquid crystal display 4 so that the bet operation can be conducted (see Fig. 20), contrary to the above mentioned case, the specific operation is defined as the operation to pull down the betting board 90 while pressing the border portion between the betting board 90 and the display area for the slot game.

Therefore, in order to change the display state (state capable of betting to the roulette game) shown in Fig. 20 to the display state shown in Fig. 19, the player conducts the specific operation to pull down the betting board 90 as mentioned in the above.

And the specific operations are not limited to the above operations. For example, by pressing some specific portion on the lower liquid crystal display 4, the betting board 90 may be displayed with a large size or displayed with a small size.

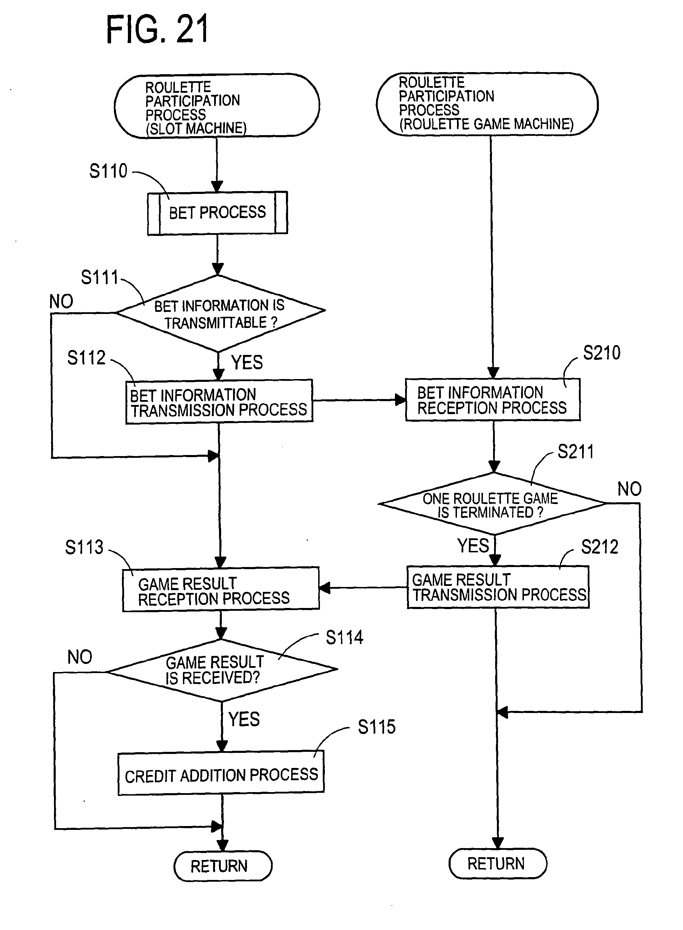

Next, in the sate capable of betting to the roulette game as shown in Fig. 20, it will be described with reference to the drawings the roulette participation process program executed while conducting interruption processes with a predetermined time interval against the main process program of the slot machine 1. Fig. 21 is a flowchart of the roulette participation process program executed between the slot machine 1 in the state capable of betting to the roulette game and the roulette game machine 100.

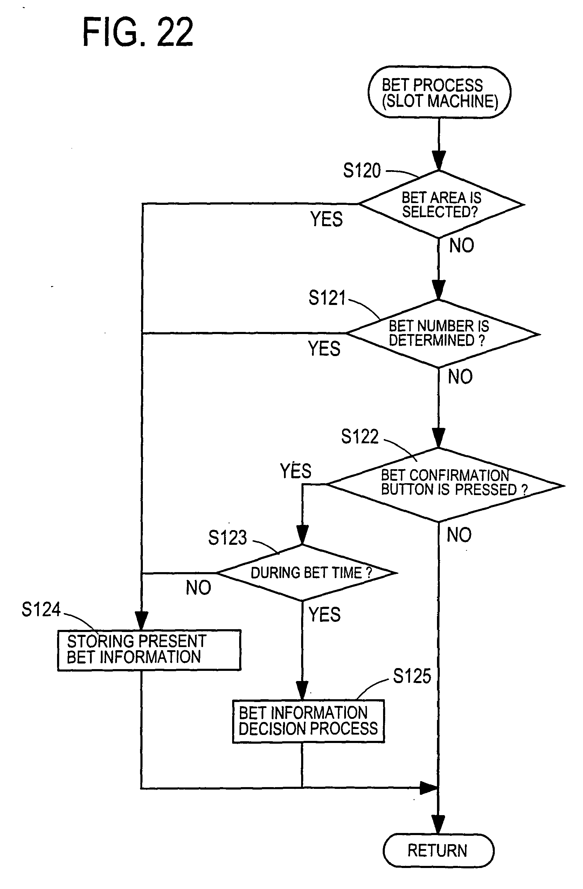

First, in the slot machine 1, when execution of the roulette participation process program is started, the bet process is done (S110). Here, the bet process in the slot machine 1 will be described with reference to Figs. 20 and 22.

As shown in Fig. 20, the betting board 90 is displayed in the display area at the lower position of the lower liquid crystal display 4.

Similar to the betting board 130 in the satellite 102 mentioned in the above, the betting board 90 is constructed from a BET timer graph 88, plural BET areas 89, a BET confirmation button 92, BET buttons 93 including a 1 BET button 93A, a 5 BET button 93B, a 10 BET button 93C and a 100 BET button 93D, and a cursor 94. And if chips are betted to some BET area 89, a chip mark 91 is displayed.

That is to say, the betting board 90 in the slot machine 1 is different from the betting board 130 in the satellite 102 at the point that the betting board 90 does not have the cashout result display portion 137 and the credit number display portion 138.

Here, each of portions in the betting board 90 has same function as that of each of portions in the satellite 102 mentioned in the above, thus explanation thereof will be omitted.

If the bet process in the slot machine 1 is executed, the CPU 50 determines whether or not the BET area 89 on the betting board 90 is selected (S120). Here, the player selects the BET area 89 for displaying the chip mark 91 by pressing the transparent touch panel 20 corresponding to the BET area 89 of the betting board 89 through the finger. If it is determined by the CPU 50 that the player conducts operation to select the BET area 89 while pressing the transparent touch panel 20 corresponding to the BET area 89 by the finger (S120: YES), procedure shifts to S124. On the other hand, if it is determined by the CPU 50 that operation to select the BET area 89 is not done (S120: NO), procedure shifts to S121.

In S121, it is determined whether or not operation to determine the bet number is conducted. That is to say, it is determined whether or not the bet number of chips to be betted is set to the BET area 89 selected in S120.

Here, operation to determine the bet number is conducted based on that the player presses each BET button (1 BET button 93A, 5 BET button 93B, 10 BET button 93C, 100 BET button 93D) among the BET buttons 93, thus the CPU 50 determines in S121 whether or not the BET buttons 93 are operated, based on the signal output from the transparent touch panel 20. If it is determined that operation to determine the bet number is done (S121: YES), chips corresponding to the bet number are betted to the BET area 89. At that time, the chip mark 91 indicating the number of chips betted up to the present time and the BET area 89 is displayed on the betting board 90, therefore the bet number of chips is indicated by the number displayed on the chip mark 91 (see Fig. 20). As mentioned, if the bet number is determined, procedure shifts to S124.

On the other hand, if it is determined that operation to determine the bet number is not conducted (S121: NO), procedure shifts to S122.

Next, in S122, the CPU 50 determines whether or not the BET confirmation button 92 is pressed. The BET confirmation button 92 is, as shown in Fig. 20, exist on the display plane of the lower liquid crystal display 4 and is a button pressed when a series of bet operations in S120 and S121 are decided. Therefore, the CPU 50 determines whether or not the transparent touch panel 20 corresponding to the BET confirmation button 92 is pressed by the finger.

If it is determined that the BET confirmation button 92 is pressed (S122: YES), the bet information determined up to the present time is decided and a transmission flag is stored in the RAM 52. Thereafter, procedure shifts to S123. On the other hand, if it is determined that the BET confirmation button 92 is not pressed (S122: NO), the bet process is terminated and procedure returns to the roulette participation process program.

If it is determined that the BET confirmation button 92 is pressed (S122: YES), it is determined whether or not the bet time continues at present. Therefore, based on the timer data transmitted from the roulette game machine 100 and stored in the RAM 52, the CPU 50 determines whether or not the bet time continues. If it is determined that the bet time continues (S123: YES), the bet information decided up to the present time is converted in a state transmittable to the roulette game machine 100, thereafter the bet process is terminated.

Here, at that time, as for the bet information stored in the RAM 52, the bet information which is previously decided and concerning with which the transmission flag is stored is also converted in a state transmittable to the roulette game machine 100.

On the other hand, if it is determined that the bet time does not continue, that is, if the roulette wheel 104 is rotating and the roulette game is executed in the roulette game machine 100 (S123: NO), procedure shifts to S124.

Here, in S124, it is conducted the process to store the present bet information in the RAM 52. That is to say, if procedure shifts to S124 from S120, the information concerning with the BET area 89 selected is added to the bet information and such bet information is stored as the present bet information in the RAM 52. And if procedure shifts to S124 from S121, the bet number decided in S121 is added to the bet information and such bet information is stored as the present bet information in the RAM 52. Further, if procedure shifts to S124 form S123, the bet information decided in S122 is stored in the RAM 52.

As mentioned, after the present bet information is stored in the RAM 52 (S124), the bet process is terminated and procedure returns to the roulette participation process program.

After the bet process (S110) is terminated, in S111, the CPU 50 determines whether or not the bet information is transmittable. Here, the CPU 50 determines whether or not the bet information converted in the transmittable state exists among the bet information independently stored in the RAM 52. If it is determined that the bet information is transmittable (S111: YES), the bet information converted in the transmittable state is transmitted to the roulette game machine 100 (S112) while adding discrimination information to discriminate the slot machine 1. After the bet information is transmitted, procedure shifts to S113. On the other hand, if it is determined that the bet information is not transmittable (S111: NO), procedure shifts to S113 while remaining the bet information in the RAM 52.

Here, the main control CPU 180 of the roulette game machine 100 receiving the bet information output from the slot machine 1 through the roulette communication device 125 stores such bet information in the RAM 182 while connecting to the discrimination signal (S210). Here, at that time, it is determined that the bet time continues in the bet process (S123: YES), therefore the roulette game machine 100 is retained in the bet time.

Thus, the bet time is terminated based on that the bet information is received and a predetermined time elapses. Thereafter, processes in S25 ~ S30 of the main process program in the roulette game machine 100 are executed.

In S211 of the roulette participation process program in the roulette game machine 100, the main control CPU 180 determines whether or not one roulette game is terminated. That is to say, in the main control program of the roulette game machine 100, it is determined whether or not processes of S25 ~ S30 are terminated.

If it is determined that one roulette game is terminated (S211: YES), the main control CPU 180 transmits the result in the present roulette game to the slot machine 1. Here, at that time, the information transmitted as the game result includes the winning number in the present roulette game and the payout for the slot machine 1. Such game result is respectively transmitted to each slot machine 1 based on the discrimination information (S212). After the game result is transmitted to each slot machine 1, the roulette participation process program in the roulette game machine 100 is terminated.

On the other hand, if it is determined that one roulette game is not terminated (S211: NO), the roulette participation process program in the roulette game machine 100 is directly terminated.

Here, the roulette participation process program of the roulette game machine 100 is executed during the main control program of the main control portion 183 is executed while conducting interruption processes with a predetermined time interval. That is, the roulette participation process program is repeatedly executed with a predetermined time interval during the electric power of the roulette game machine 100 is switched on.

On the other hand, in the slot machine 1 receiving the game result in the present game from the roulette game machine 100, in S113, the game result reception process is conducted. As mentioned in the above, when the game result including the winning number in the present game and the payout in the present roulette game is received from the roulette game machine 100, the CPU 50 stores the game result in the RAM 52 (S114).

Here, if it is determined that the game result is not transmitted, procedure shifts to S 114 without executing this process.

In S114, it is determined by the CPU 50 whether or not the game result is received through the slot communication device 25. At that time, the CPU 50 determines the process in S114 based on whether or not the game result stored in the RAM 52 in the game result reception process (S113) exists. If it is determined that the game result exists in the RAM 52 (S114: YES), the credit addition process (S115) is done.

In the credit addition process (S115), it is conducted a process that the credit number corresponding to the payout of the game result received is added to the credit number existing at present in the slot machine 1. Thereby, the credit obtained in the roulette game done in the roulette game machine 100 is used in the slot game done in the slot machine 1, without converting such credits into the game media such as coins or medals. The credit obtained in the roulette game is added to the credit of the slot machine 1 (S115), thereafter the roulette participation process program is terminated. On the other hand, if it is determined that the game result is not received (S114: NO), the roulette game is directly terminated.

As mentioned in the above, in the gaming system 200 of the embodiment, even if the slot game is executed in the slot machine 1, the player can participate in the roulette game, which is the multi-players joining game, done in the roulette game machine 100.

That is to say, while staying at the place where the slot machine 1 is installed, the player can participate in the roulette game done in the roulette game machine 100 which is installed in the place quite different from the place where the slot machine 1 is installed. Therefore, the player can enjoy two games without moving between the slot machine 1 and the roulette game machine 100.

Thus, while staying at the place where the slot machine 1 is installed, two opportunities to select one of two games of the slot game and the roulette game can be always given to the player. And if the player loses interest for one game, the player can conduct the other game. That is, convenience for the player can be improved and operation rate of the slot machine 1 can be improved.

And in the slot machine 1 according to the embodiment, the image indicating the state of the roulette game done in the roulette game machine 100 is always displayed on the upper liquid crystal display 3, thereby the player can acknowledge the sate of the roulette game done in the roulette game machine 1 while staying at the place where the slot machine 1 is installed. According to this, interest for the roulette game can be raised.

And in the slot machine 1 of the embodiment, in a case that display state on the lower liquid crystal display 4 is made into the roulette betting state (see Fig. 20), the betting board 90 is displayed without perfectly concealing the variable display portions 21 ~ 23 used in the slot game. Thereby, the bet operation for the roulette game can be conducted while grasping the state of the roulette game.

Further, in the slot machine 1, the process of the bet operation for the roulette game is executed while voluntarily conducting interruption processes against the control program of the slot game. Namely, in the slot machine 1 of the embodiment, the bet operation for the roulette game can be done while executing the slot game. Thereby, even if the player loses interest for the slot game done in the slot machine 1 or has time on his hands, the player can enjoy the roulette game.

For example, similar to the slot machine 1 of the embodiment, if plural number of times of free games are adopted as the bonus game in the slot machine, it is not required for the player to conduct any operations while the free games are executed, therefore the player becomes free and has time on his hands. At that time, in the slot machine 1 of the embodiment, since the bet operation for the roulette game can be done while executing the slot game, the player can enjoy the roulette game in the slot machine 1 without becoming free. Further, in this case, since the player can confirm the game result of the free games while conducting the bet operation for the roulette game, interest for the free games in the slot game is not lost.

Here, the present invention is not limited to the embodiment and, various modifications and changes can be done within the scope of the present invention. For example, although the gaming system 200 of the embodiment is constructed from the slot machines 1 and the roulette game machine 100, the gaming machines are not limited to the above. For example, instead of the slot machine 1, it can be used a gaming machine in which a card game for one player such a poker game or a black jack game can be executed. And instead of the roulette game 100, it can be used a gaming machine in which plural players can participate in a horse race game or keno game.

## Claims

1. A gaming machine comprising:
an operation portion for conducting an operation of a first game;
a communication device for communicating with another gaming machine providing a second game in which a plurality of players participate;
a first game control device for controlling the first game;
a first display device for displaying first image data concerning with the first game;
the gaming machine further comprising:
a display control device for controlling the first display device so as to switch a first display mode according to which the first image data are displayed and a second display mode according to which both the first image data and an acceptance portion to conduct an operation of the second game are displayed; and
a game operation control portion for accepting the operation of the second game through the acceptance portion when the first display device is switched to the second display mode by the display control device.

2. The gaming machine according to claim 1, wherein the acceptance portion is displayed on the first display device with a minimum size in addition to the first image data displayed on the first display device with a maximum size in the first display mode.

3. The gaming machine according to claim 2, further comprising:
a determination device for determining whether or not a specific operation is conducted by a player participating in the second game.

4. The gaming machine according to claim 3, wherein the first display device is switched to the second display mode or the first display mode by the display control device when the determination device determines that the specific operation is conducted.

5. The gaming machine according to claim 4, wherein the acceptance portion is enlarged and displayed on the first display device with a larger size than the minimum size and the first image data are reduced and displayed on the first display device with a smaller size than the maximum size in the second display mode.

6. The gaming machine according to claim 3, further comprising:
a transparent touch panel arranged on a front plane of the first display device;
wherein the specific operation is conducted when the player touches the acceptance portion through the transparent touch panel.

7. The gaming machine according to claim 6, wherein the first display device is switched to the first display mode when the player presses the acceptance portion so as to pull down thereof, and
wherein the first display device is switched to the second display mode when the player presses the acceptance portion so as to pull up thereof.

8. The gaming machine according to claim 1, further comprising:
a second display device for displaying second image data concerning with the second game.

9. A gaming system including a first gaming machine for providing a first game and a second gaming machine for providing a second game, the first gaming machine and the second gaming machine being connected so as to communicate with each other,
wherein the first gaming machine comprising:
a first operation portion for conducting an operation of the first game;
a first game control device for controlling the first game;
a first display device for displaying first image data concerning with the first game;
a display control device for controlling the first display device so as to switch a first display mode according to which the first image data are displayed and a second display mode according to which both the first image data and an acceptance portion to conduct an operation of the second game are displayed; and
a game operation control portion for accepting the operation of the second game through the acceptance portion when the first display device is switched to the second display mode by the display control device;
a first communication device for transmitting an operation result through the acceptance portion to the second gaming machine and for receiving data concerning with the second game transmitted from the second gaming machine;
the second gaming machine comprising:
a second game control device for controlling the second game;
a second operation portion for conducting the operation of the second game; and
a second communication device for transmitting the data concerning with the second game to the first gaming machine and for receiving the operation result through the acceptance portion transmitted from the first gaming machine.

10. The gaming system according to claim 9, wherein the first gaming machine has a second display device for displaying second image data concerning with the second game.
